(19) Europäisches Patentamt
European Patent Office
Office européen des brevets

(11) EP 2 555 457 B1

(12) EUROPEAN PATENT SPECIFICATION

(45) Date of publication and mention
of the grant of the patent:
**13.11.2019 Bulletin 2019/46**

(51) Int Cl.:
*H04L 1/16* *(2006.01)*        *H04L 1/06* *(2006.01)*
*H04L 1/18* *(2006.01)*

(21) Application number: **11762014.6**

(22) Date of filing: **31.03.2011**

(86) International application number:
**PCT/CN2011/072344**

(87) International publication number:
**WO 2011/120440 (06.10.2011 Gazette 2011/40)**

(54) **METHOD AND APPARATUS FOR RETRANSMISSION**

VERFAHREN UND VORRICHTUNG ZUR ÜBERTRAGUNGSWIEDERHOLUNG

PROCÉDÉ ET APPAREIL DE RETRANSMISSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.05.2010 CN 201010192406
14.05.2010 CN 201010176287
31.03.2010 CN 201010137700**

(43) Date of publication of application:
**06.02.2013 Bulletin 2013/06**

(73) Proprietor: **Huawei Technologies Co., Ltd.
Longgang District
Shenzhen, Guangdong 518129 (CN)**

(72) Inventors:
• **WU, Qiang
Shenzhen
Guangdong 518129 (CN)**
• **LV, Yongxia
Shenzhen
Guangdong 518129 (CN)**
• **ZHOU, Yongxing
Shenzhen
Guangdong 518129 (CN)**

(74) Representative: **Gill Jennings & Every LLP
The Broadgate Tower
20 Primrose Street
London EC2A 2ES (GB)**

(56) References cited:
EP-A1- 2 151 941        CN-A- 101 330 479
CN-A- 101 611 586        CN-A- 101 617 487
US-A1- 2009 282 310        US-A1- 2009 304 109
US-A1- 2009 307 558

**Description**

**FIELD OF THE INVENTION**

The present invention relates to the field of wireless communication technologies, and in particular, to a retransmission method and apparatus and a communication system.

**BACKGROUND OF THE INVENTION**

In long term evolution (LTE, Long Term Evolution), considering limited uplink transmit power of a user equipment (UE, User Equipment), in order to decrease a cubic metric (CM, Cubic Metric) characteristic of a sent signal, single carrier frequency division multiple access (SC-FDMA, single carrier frequency division multiple access) is used as a multiple access manner in an uplink. In LTE-advanced (LTE-A), the SC-FDMA in the LTE continues to be used as an uplink multiple access in an uplink. In the LTE-A, up to four sending antennas can be supported for sending simultaneously.

Because multiple antennas are used in the uplink, when closed loop transmission is used, data in multiple layers may be transmitted, so that two channel-coded codewords are transmitted. If the two channel-coded codewords are transmitted in initial transmission and one channel-coded codeword is transmitted in retransmission, because no uplink grant (UL grant) signaling exists in the retransmission and a rank of the retransmission is different from a rank of the initial transmission, a UE end cannot know which precoding matrix should be used in the retransmission, so that the retransmission fails when no uplink grant signaling exists.

US 2009/307558 A1 discloses a method for correcting errors in a multiple antenna system based on a plurality of sub-carriers and a transmitting/receiving apparatus supporting the same. The method includes determining a phase shift based precoding matrix phase shifted at a predetermined phase angle, initially transmitting each sub-carrier symbol to a receiver in a packet unit by using the phase shift based precoding matrix, reconstructing the phase shift based precoding matrix to reduce a spatial multiplexing rate if a negative reception acknowledgement (NACK) is received from the receiver, and retransmitting the initially transmitted sub-carrier symbol by using the reconstructed phase shift based precoding matrix using offset information fed back from the receiver or random offset information.

**SUMMARY OF THE INVENTION**

The scope of protection of the present invention is defined by the appended claims. In the following description, any embodiment(s) referred to and not falling within the scope of the appended claims, is (are) merely example(s) useful to the understanding of the invention.

Embodiments of the present invention provide a retransmission method, apparatus, and system, thereby providing a guarantee for retransmission success of a UE.

An example of the present invention provides a retransmission method, including:

after sending two channel-coded codewords in initial transmission, receiving a retransmission indication, where the retransmission indication includes an identifier of one channel-coded codeword to be retransmitted;

according to a preset phase of each symbol, determining a precoding matrix of each symbol of the one channel-coded codeword to be retransmitted, where a phase relationship of each symbol is fixed; and

after coding, by using the precoding matrix, each symbol of the one channel-coded codeword to be retransmitted, sending the coded symbol through an antenna.

An example of the present invention further provides a retransmission method, including:

after sending two channel-coded codewords in initial transmission, receiving a retransmission indication, where the retransmission indication includes an identifier of one channel-coded codeword to be retransmitted;

acquiring precoding matrix determining information of retransmission;

according to the precoding matrix determining information, determining a precoding matrix of each symbol of the one channel-coded codeword to be retransmitted; and

after coding, by using the precoding matrix, each symbol of the one channel-coded codeword to be retransmitted, sending the coded symbol through an antenna.

An example of the present invention further provides a retransmission method, including:

after sending two channel-coded codewords in initial transmission, receiving a retransmission indication, where the retransmission indication includes an identifier of one channel-coded codeword to be retransmitted;

acquiring an index number of a precoding matrix for retransmission from uplink grant signaling sent in the initial transmission;

according to the index number, determining a precoding matrix of each symbol of the one channel-coded codeword to be retransmitted; and

after coding, by using the precoding matrix, each symbol of the one channel-coded codeword to be retransmitted, sending the coded symbol through an antenna.

An example of the present invention further provides a retransmission apparatus, including:

a receiving unit, configured to, after two channel-coded codewords are sent in initial transmission, receive a retransmission indication, where the retransmission indication includes an identifier of one channel-coded codeword to be retransmitted;

a determining unit, configured to, after the receiving unit receives the retransmission indication, determine, according to a preset phase of each symbol, a precoding matrix of each symbol of the one channel-coded codeword to be retransmitted, where a phase relationship of each symbol is fixed; and

a coding and sending unit, configured to, after coding, by using the precoding matrix determined by the determining unit, each symbol of the one channel-coded codeword to be retransmitted, send the coded symbol through an antenna.

An aspect of the present invention further provides a retransmission apparatus, including:

a receiving unit, configured to, after two channel-coded codewords are sent in initial transmission, receive a retransmission indication, where the retransmission indication includes an identifier of one channel-coded codeword to be retransmitted;

an acquiring unit, configured to, after the receiving unit receives the retransmission indication, acquire an index number of a precoding matrix for retransmission from uplink grant signaling sent in the initial transmission;

a determining unit, configured to determine, according to the index number acquired by the acquiring unit, a precoding matrix of each symbol of the one channel-coded codeword to be retransmitted; and

a coding and sending unit, configured to, after coding, by using the precoding matrix determined by the determining unit, each symbol of the one channel-coded codeword to be retransmitted, send the coded symbol through an antenna.

An example of the present invention further provides a retransmission apparatus, including:

a receiving unit, configured to, after two channel-coded codewords are sent in initial transmission, receive a retransmission indication, where the retransmission indication includes an identifier of one channel-coded codeword to be retransmitted;

an acquiring unit, configured to, after the receiving unit receives the retransmission indication, acquire precoding matrix determining information of retransmission;

a determining unit, configured to determine, according to the precoding matrix determining information acquired by the acquiring unit, a precoding matrix of each symbol of the one channel-coded codeword to be retransmitted; and

a coding and sending unit, configured to, after coding, by using the precoding matrix determined by the determining unit, each symbol of the one channel-coded codeword to be retransmitted, send the coded symbol through an antenna.

An example of the present invention further provides a communication system, including a retransmission apparatus provided in the embodiment of the present invention.

An example of the present invention further provides a retransmission method, including:

after transmitting two channel-coded codewords in initial transmission, receiving a retransmission indication, wherein the retransmission indication comprises an identifier of one channel-coded codeword to be retransmitted;

presetting a phase of each symbol, and according to the preset phase of each symbol and the identifier of the one channel-coded codeword, determining a precoding matrix of each symbol of the one channel-coded codeword to be retransmitted, wherein a phase relationship of each symbol is fixed; and

after coding, by using the precoding matrix, each symbol of the one channel-coded codeword to be retransmitted, sending the coded symbol through an antenna.

If four antennas exist, the initial transmission is rank 2 transmission, and retransmission is rank 1 transmission, the presetting the phase of each symbol comprises:

dividing the four antennas into two groups according to a precoding matrix used in the initial transmission, and keeping a phase relationship of two antennas in each group in the retransmission consistent with that in the initial transmission, and keeping a phase relationship between the two groups of antennas fixed among symbols.

If four antennas exist, the initial transmission is rank 3 transmission, and retransmission is rank 2 transmission, the presetting the phase of each symbol comprises:

in a rank 3 precoding matrix, performing normalization processing on a precoding vector which is of one layer and is sent by two antennas, to obtain a precoding vector of one layer in a precoding matrix for the rank 2 transmission, and synthesizing precoding vectors, which are of two layers and use one antenna each, into a precoding vector of the other layer in the precoding matrix for the rank 2 transmission.

If four antennas exist, the initial transmission is rank 4 transmission, and retransmission is rank 2 transmission, the presetting the phase of each symbol comprises:

selecting a first number of code book codewords from rank 2 code book codewords, wherein the first number is less than the number of the rank 2 code book codewords, and a minimum chordal distance of the first number of code book codewords is the maximum.

If four antennas exist, the initial transmission is rank r transmission, and retransmission is rank z transmission, r is an integer, $r \geq 2$, z is an integer, $z \geq 1$, and $r > z$, and
the sending the coded symbol through the antenna comprises:

dividing the antennas into r antenna groups, wherein a phase relationship among antennas in an antenna group remains unchanged from the initial transmission;
if a phase relationship among the r antenna groups is fixed, sending the coded symbol through the antenna by using z demodulation pilot ports; and
if the phase relationship among the r antenna groups is unfixed, determining the number of unfixed phases, and sending the coded symbol through the antenna by using more than z demodulation pilot ports.

The phase relationship of each symbol is fixed comprises that:

a phase difference between any two adjacent symbols is of a same value.
wherein the sending the coded symbol through the antenna comprises:
sending the coded symbol through the antenna by using a same demodulation pilot port as that in the initial transmission.

The phase relationship of each symbol is fixed comprises that:

the phase of each symbol is the same; and/or
the determined precoding matrix of each symbol of the one channel-coded codeword to be retransmitted is the same.

The precoding matrix of each symbol of the one channel-coded codeword to be retransmitted is adjusted according to the different number of times of retransmission.
The precoding matrix is a preset precoding matrix.
An aspect of the present invention further provides a retransmission method, including:

after transmitting two channel-coded codewords in initial transmission, receiving a retransmission indication, wherein the retransmission indication comprises an identifier of one channel-coded codeword to be retransmitted;
acquiring precoding matrix determining information of retransmission;
according to the precoding matrix determining information, determining a precoding matrix of each symbol of one channel-coded codeword with the identifier of the one channel-coded codeword, where the precoding matrix is a precoding matrix for the retransmission, the precoding matrix for the retransmission is determined according to a mapping relationship, and the mapping relationship is established between the precoding matrix for the retransmission and a precoding matrix for the initial transmission; and
after coding, by using the precoding matrix for the retransmission, the each symbol of the one channel-coded codeword to be retransmitted, sending the coded symbol through an antenna;
wherein a rank of the precoding matrix for the retransmission and a rank of the precoding matrix for the initial transmission are different.

If the precoding matrix determining information is a redundant version in retransmission, the determining, according to the precoding matrix determining information, the precoding matrix of each symbol of the one channel-coded codeword with the identifier of the one channel-coded codeword to be retransmitted comprises:
according to correspondence between the redundant version and the precoding matrix, acquiring an index number of the precoding matrix, and determining the precoding matrix according to the index number.

If the precoding matrix determining information is a sub-frame number of the one channel-coded codeword to be retransmitted, the current number of times of transmission, or a redundant version, the determining, according to the precoding matrix determining information, the precoding matrix of each symbol of the one channel-coded codeword with the identifier of the one channel-coded codeword to be retransmitted comprises:

dividing the sub-frame number, the current number of times of transmission, or the redundant version by the preset total number of sets of code books for the retransmission, using an obtained remainder as an index number of the precoding matrix, and determining the precoding matrix according to the index number; or
adding a random variable to the sub-frame number, the current number of times of transmission, or the redundant version, and then multiplying an obtained sum by a preset coefficient, and then dividing an obtained product by the preset total number of sets of code books for the retransmission, using an obtained remainder as an index number of the precoding matrix, and determining the precoding matrix according to the index number, wherein the random variable is a cell number; or
multiplying the sub-frame number, the current number of times of transmission, or the redundant version by a preset coefficient, dividing an obtained product by the preset total number of sets of code books for the retransmission, using an obtained remainder as an index number of the precoding matrix, and determining the precoding matrix according to the index number.

If the precoding matrix determining information is the current number of times of transmission, the determining the precoding matrix of each symbol of the one channel-coded codeword with the identifier of the one channel-coded codeword to be retransmitted comprises:

according to a rank of a precoding matrix to be used in the retransmission, determining a set of code books for the retransmission, wherein the set of code books for the retransmission is a subset of a set of code books for the initial transmission during transmission of the rank; and
searching for the precoding matrix in the set of code books for the retransmission by using the current number of times of the transmission as an index.

The set of code books for the retransmission is a proper subset of the set of code books for the initial transmission during the transmission of the rank.

An example of the present invention further provides a retransmission method, including:

receiving uplink grant signaling sent in an initial transmission process, wherein the signaling comprises an index number of a precoding matrix for retransmission;
after transmitting two channel-coded codewords in initial transmission, receiving a retransmission indication, wherein the retransmission indication comprises an identifier of one channel-coded codeword to be retransmitted;
according to the index number, determining a precoding matrix of each symbol of the one channel-coded codeword to be retransmitted; and
after coding, by using the precoding matrix, each symbol of the one channel-coded codeword to be retransmitted, sending the coded symbol through an antenna.

An example of the present invention further provides a retransmission apparatus, including:

a receiving unit, configured to, after two channel-coded codewords are sent in initial transmission, receive a retransmission indication, wherein the retransmission indication comprises an identifier of one channel-coded codeword to be retransmitted;
a determining unit, configured to, after the receiving unit receives the retransmission indication, determine, according to a preset phase of each symbol, a precoding matrix of each symbol of the one channel-coded codeword to be retransmitted, wherein a phase relationship of each symbol is fixed; and
a coding and sending unit, configured to, after coding, by using the precoding matrix determined by the determining unit, each symbol of the one channel-coded codeword to be retransmitted, send the coded symbol through an antenna.

An example of the present invention further provides a retransmission apparatus, including:

a receiving unit, configured to, after two channel-coded codewords are sent in initial transmission, receive a retransmission indication, wherein the retransmission indication comprises an identifier of one channel-coded codeword to be retransmitted;

an acquiring unit, configured to, after the receiving unit receives the retransmission indication, acquire an index number of a precoding matrix for retransmission from uplink grant signaling sent in the initial transmission;

a determining unit, configured to determine, according to the index number acquired by the acquiring unit, a precoding matrix of each symbol of one channel-coded codeword with the identifier of the one channel-coded codeword to be retransmitted; and

a coding and sending unit, configured to, after coding, by using the precoding matrix determined by the determining unit, each symbol of the one channel-coded codeword to be retransmitted, send the coded symbol through an antenna.

An example of the present invention further provides a retransmission apparatus, including:

a receiving unit, configured to, after two channel-coded codewords are sent in initial transmission, receive a retransmission indication, wherein the retransmission indication comprises an identifier of one channel-coded codeword to be retransmitted;

an acquiring unit, configured to, after the receiving unit receives the retransmission indication, acquire precoding matrix determining information of retransmission;

a determining unit, configured to determine, according to the precoding matrix determining information acquired by the acquiring unit, a precoding matrix of each symbol of the one channel-coded codeword to be retransmitted; and

a coding and sending unit, configured to, after coding, by using the precoding matrix determined by the determining unit, each symbol of the one channel-coded codeword to be retransmitted, send the coded symbol through an antenna.

An aspect of the present invention further provides a retransmission apparatus, including:

a unit configured to transmit two channel-coded codewords in initial transmission;

a unit configured to receive a retransmission indication, where the retransmission indication includes an identifier of one channel-coded codeword to be retransmitted;

a unit configured to acquire precoding matrix determining information of the retransmission;

a unit configured to according to the precoding matrix determining information, determine a precoding matrix of each symbol of the one channel-coded codeword to be retransmitted, where the precoding matrix is a precoding matrix for the retransmission, the precoding matrix for the retransmission is determined according to a mapping relationship, and the mapping relationship is established between the precoding matrix for the retransmission and a precoding matrix for the initial transmission; and

a unit configured to code, by using the precoding matrix for the retransmission, the each symbol of the one channel-coded codeword to be retransmitted, and send the coded symbol through an antenna wherein a rank of the precoding matrix for the retransmission determined by the determining unit (1203) and a rank of the precoding matrix for the initial transmission are different.

It can be seen from the forgoing technical solution provided in the embodiments of the present invention that, in the embodiments of the present invention, after receiving the retransmission indication, the precoding matrix of each symbol of the one channel-coded codeword to be retransmitted may be determined according to the preset phase of each symbol, so as to determine the precoding matrix for the retransmission when no uplink grant signaling is received, thereby completing the retransmission when no uplink grant signaling is sent, and reducing an overhead for sending the uplink grant signaling. Moreover, because the phase relationship of each symbol is fixed, the determined precoding matrix is unique, so that a network side can correctly perform channel estimation.

## BRIEF DESCRIPTION OF THE DRAWINGS

To illustrate technical solutions in embodiments of the present invention more clearly, accompanying drawings required for describing the embodiments are introduced below briefly. Apparently, the accompanying drawings in the following descriptions merely show some of the embodiments of the present invention, and persons of ordinary skill in the art can obtain other drawings according to these accompanying drawings without creative efforts.

FIG. 1 is a flow chart of a retransmission method according to an embodiment of the present invention;
FIG. 2 is a schematic structural diagram of a sub-frame according to an embodiment of the present invention;
FIG. 3 is a schematic structural diagram of a sub-frame according to another embodiment of the present invention;
FIG. 4 is a flow chart of a retransmission method according to another embodiment of the present invention;
FIG. 5 is a schematic diagram of a code book according to an embodiment of the present invention;
FIG. 6 is a flow chart of a retransmission method according to another embodiment of the present invention;
FIG. 7 is a schematic diagram of a code book according to another embodiment of the present invention;
FIG. 8 is a schematic diagram of a code book according to another embodiment of the present invention;
FIG. 9 is a schematic diagram of a code book according to another embodiment of the present invention;
FIG. 10 is a flow chart of a retransmission method according to another embodiment of the present invention;
FIG. 11 is a structural diagram of a retransmission apparatus according to another embodiment of the present invention;
FIG. 12 is a structural diagram of a retransmission apparatus according to another embodiment of the present invention; and
FIG. 13 is a structural diagram of a retransmission apparatus according to another embodiment of the present invention.

## DETAILED DESCRIPTION OF THE EMBODIMENTS

Technical solutions of embodiments of the present invention are hereinafter described clearly and completely with reference to accompanying drawings in the embodiments of the present invention. Evidently, the described embodiments are only some exemplary embodiments of the present invention, rather than all embodiments of the present invention. All other embodiments obtained by persons of ordinary skill in the art based on the embodiments of the present invention without creative efforts shall fall within the protection scope of the present invention.

A retransmission method provided in an embodiment of the present invention is applied in an LTE-A system. Specifically, what is described is a retransmission processing flow in the following case: when closed-loop transmission is performed through multiple input multiple output (MIMO, Multiple Input Multiple Output) in an uplink and no UL grant exists for retransmission, two channel-coded codewords are transmitted in initial transmission and one of the two channel-coded codewords needs to be retransmitted.

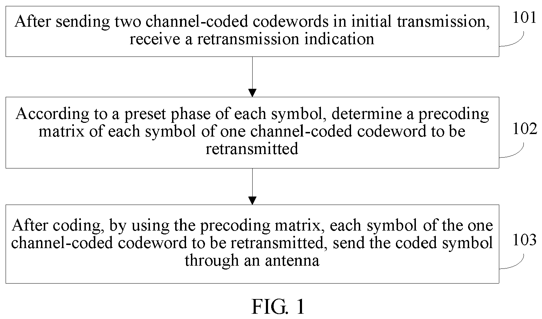

A retransmission method provided in an embodiment of the present invention is first introduced. FIG. 1 describes a flow chart of a retransmission method provided in an embodiment of the present invention. The embodiment describes a processing flow of a user equipment, including:

101: After sending two channel-coded codewords in initial transmission, receive a retransmission indication, where the retransmission indication includes an identifier of one channel-coded codeword to be retransmitted.

The retransmission indication is sent by a network side.

102: According to a preset phase of each symbol, determine a precoding matrix of each symbol of the one channel-coded codeword to be retransmitted, where a phase relationship of each symbol is fixed.

A channel-coded codeword is divided into multiple symbols in transmission, where the number of symbols obtained through division differs according to different networks.

A codebook of precoding matrix corresponding to each rank in case of different number of antenna is determined. When the number of antennas is determined and a rank of a precoding matrix used in initial transmission and a rank of a precoding matrix to be used in retransmission are both determined, the phase of each retransmitted symbol may be preset, so as to determine a precoding matrix. In order to fully use a multi-antenna diversity gain, the phase of each symbol may be set differently, so that a phase difference between any two adjacent symbols is non-zero, so that not only a multi-antenna power gain of the user equipment may be used but also the multi-antenna diversity gain may be used. Moreover, in an embodiment of the present invention, phase differences between any two adjacent symbols are a same non-zero value. For example, the phase difference may be $\pi/4$, $\pi/6$, and so on.

103: After coding, by using the precoding matrix, each symbol of the one channel-coded codeword to be retransmitted, send the coded symbol through an antenna.

After the precoding matrix is determined, each symbol may be coded by using the precoding matrix and sent. When sending is performed through the antenna, a pilot symbol is the same as that in initial transmission, that is, a pilot with two ports is sent, so that the network side can correctly perform channel estimation. Therefore, the initial transmission and the retransmission can use a same demodulation pilot (DMRS, DeModulation Reference Signal) port.

It can be known from the forgoing that, in this embodiment, after receiving the retransmission indication, the precoding matrix of each symbol of the one channel-coded codeword to be retransmitted may be determined according to the preset phase of each symbol, so as to determine the precoding matrix for the retransmission when no uplink grant signaling is received, thereby completing the retransmission when no uplink grant signaling is sent, and reducing an overhead for sending the uplink grant signaling. Moreover, because the phase relationship of each symbol is fixed, the determined precoding matrix is unique, so that the network side can correctly perform the channel estimation.

A retransmission method provided in another embodiment of the present invention is described in the following. The embodiment describes a case of four-antenna transmission, where initial transmission is rank 2 transmission, and retransmission is rank 1 transmission. In this case, two codewords are transmitted in initial transmission and each codeword occupies a layer, but one codeword is wrongly transmitted and needs to be retransmitted.

Because an uplink rank 2 code book is a code book for keeping a CM characteristic (CMP, Cubic Metric Preserving), a relationship among antennas in the retransmission can be derived by using a precoding matrix used in the initial transmission. It is assumed that, the precoding matrix used in the initial transmission is $\begin{bmatrix} 1 & 0 \\ 1 & 0 \\ 0 & 1 \\ 0 & -j \end{bmatrix}$, which

indicates that, in the initial transmission, antenna 1 and antenna 2 are used for a first layer and antenna 3 and antenna 4 are used for a second layer. Moreover, a relationship between antenna 1 and antenna 2 and a relationship between antenna 3 and antenna 4 can be obtained. A specific relationship may be shown in the following equation:

$$\begin{bmatrix} h_{11} & h_{12} & h_{13} & h_{14} \\ h_{21} & h_{22} & h_{23} & h_{24} \end{bmatrix} \begin{bmatrix} 1 & 0 \\ 1 & 0 \\ 0 & 1 \\ 0 & -j \end{bmatrix} = \begin{bmatrix} h_{11}+h_{12} & h_{13}-j*h_{14} \\ h_{21}+h_{22} & h_{23}-j*h_{24} \end{bmatrix}$$

$h_{i,j}$ represents a channel between an $i^{th}$ receiving antenna and an $j^{th}$ sending antenna, so if antenna 1 and antenna 2 are regarded as group 1, and antenna 3 and antenna 4 are regarded as a group 2, a phase relationship between the two groups is shown in the following formula:

$$\begin{bmatrix} 1 & 0 \\ 1 & 0 \\ 0 & 1 \\ 0 & -j \end{bmatrix} \longrightarrow \begin{bmatrix} 1 & & & \\ & 1 & & \\ & & e^{j\alpha} & \\ & & & e^{j\alpha} \end{bmatrix} \begin{bmatrix} 1 \\ 1 \\ 1 \\ -j \end{bmatrix}$$

In the foregoing formula, $\begin{bmatrix} 1 & & & \\ & 1 & & \\ & & e^{j\alpha} & \\ & & & e^{j\alpha} \end{bmatrix}$ is a diagonal matrix, and a value range of a phase $a$ may be

$(-\infty, +\infty)$. For example, the value range of $a$ may be $(0, 2\pi)$ or $(-\pi, \pi)$ or the like. It should be noted that, the embodiment of the present invention does not limit a specific value range of the phase $a$, and as long as $e^{j\alpha}$ is a complex unit circle in the value (a real number) range of the phase $a$, implementation of the embodiment of the present invention is not affected.

In this case, a specific value of the phase $a$ cannot be derived from the precoding matrix of the initial transmission. Because the phase $a$ may be used to represent a phase relationship between different antenna groups, a phase of a certain antenna group may be fixed to be 0, and phases of other antenna groups are represented by $a_1$, $a_2$, ..., $a_n$, where n is obtained by subtracting 1 from the number of antenna groups. In this embodiment, the number of antenna groups is 2. $a = a_1$ may be set, and a variant of the foregoing formula may be $\begin{bmatrix} 1 & 0 \\ 1 & 0 \\ 0 & 1 \\ 0 & -j \end{bmatrix} -> \begin{bmatrix} e^{j\alpha} & & & \\ & e^{j\alpha} & & \\ & & 1 & \\ & & & 1 \end{bmatrix} \begin{bmatrix} 1 \\ 1 \\ 1 \\ -j \end{bmatrix}$. The following description is given according to a relationship of

$$\begin{bmatrix} 1 & 0 \\ 1 & 0 \\ 0 & 1 \\ 0 & -j \end{bmatrix} \longrightarrow \begin{bmatrix} 1 & & & \\ & 1 & & \\ & & e^{j\alpha} & \\ & & & e^{j\alpha} \end{bmatrix} \begin{bmatrix} 1 \\ 1 \\ 1 \\ -j \end{bmatrix}.$$

Therefore, in order to determine the precoding matrix during the retransmission, a phase relationship between antenna 1 and antenna 2 may remain the same as that in the initial transmission, and a phase relationship between antenna 3 and antenna 4 may remain the same as that in the initial transmission, but the phase relationship between group 1 and group 2 varies in each symbol, but the phase relationship between the two groups has a fixed relationship among the symbols, so that a phase difference between any two adjacent symbols in the symbols included in a channel-coded codeword are of a same value. In this embodiment, it is assumed that, the channel-coded codeword includes six symbols, phase relationships of symbols 1 to 6 may be $e^{j\alpha_1}$ to $e^{j\alpha_6}$, and a phase relationship $\alpha_1$, $\alpha_2$, $\alpha_3$, $\alpha_4$, $\alpha_5$, or $\alpha_6$ of each symbol is fixed, and the fixed relationship is known by both a network side and a user equipment. It is assumed that 1 $\alpha_i = \dfrac{(i-1)\pi}{6}$. Therefore, a precoding matrix of symbol 1 is $\begin{bmatrix} 1 \\ 1 \\ e^{j\alpha_1} \\ -je^{j\alpha_1} \end{bmatrix}$, a precoding matrix of symbol 2 is $\begin{bmatrix} 1 \\ 1 \\ e^{j\alpha_2} \\ -je^{j\alpha_2} \end{bmatrix}$, a precoding matrix of symbol 3 is $\begin{bmatrix} 1 \\ 1 \\ e^{j\alpha_3} \\ -je^{j\alpha_3} \end{bmatrix}$, a precoding matrix of symbol 4 is $\begin{bmatrix} 1 \\ 1 \\ e^{j\alpha_4} \\ -je^{j\alpha_4} \end{bmatrix}$, a precoding matrix of symbol 5 is $\begin{bmatrix} 1 \\ 1 \\ e^{j\alpha_5} \\ -je^{j\alpha_5} \end{bmatrix}$, and a precoding matrix of symbol 6 is

$$\begin{bmatrix} 1 \\ 1 \\ e^{j\alpha_6} \\ -je^{j\alpha_6} \end{bmatrix}.$$

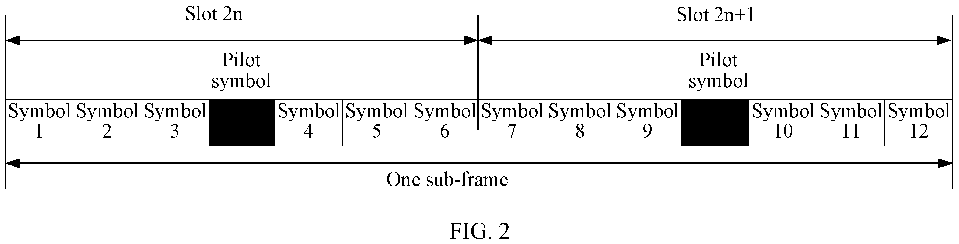

It should be noted that, this embodiment is described in a case that the channel-coded codeword includes six symbols, but it is not limited that the channel-coded codeword can only includes six symbols. FIG. 2 describes a structure of a sub-frame in an embodiment of the present invention. As shown in FIG. 2, a sub-frame includes slots 2n (n is an integer) and 2n+1, one slot includes six symbols and one pilot symbol. Slot 2n includes symbols 1 to 6, and slot 2n+1 includes symbols 7 to 12. Although the retransmission is the rank 1 transmission, the pilot symbol is the same as that in the initial transmission, that is, a pilot with two ports are sent, so that the network side can normally perform the channel estimation. One slot in FIG. 2 is taken as an example, where the one slot includes one pilot symbol and six data symbols.

It is assumed that one pilot port is used for the pilot symbol and a precoding matrix is: $\begin{bmatrix} 1 \\ 1 \\ e^{j\alpha_m} \\ -je^{j\alpha_m} \end{bmatrix}$, and a precoding

matrix $\begin{bmatrix} 1 \\ 1 \\ e^{j\alpha_n} \\ -je^{j\alpha_n} \end{bmatrix}$ is used for a certain data symbol, $a_m \neq a_n$. It is assumed that, channels between a certain receiving antenna and four sending antennas at the network side are $[h_1\ h_2\ h_3\ h_4]$, so an equivalent channel of the pilot symbol

$$\begin{bmatrix} h_1 & h_2 & h_3 & h_4 \end{bmatrix} \times \begin{bmatrix} 1 \\ 1 \\ e^{j\alpha_m} \\ -je^{j\alpha_m} \end{bmatrix} = h_1 + h_2 + h_3 e^{j\alpha_m} - h_4 je^{j\alpha_m}$$

is $\qquad$ and an equivalent channel of the data symbol is

$$\begin{bmatrix} h_1 & h_2 & h_3 & h_4 \end{bmatrix} \times \begin{bmatrix} 1 \\ 1 \\ e^{j\alpha_n} \\ -je^{j\alpha_n} \end{bmatrix} = h_1 + h_2 + h_3 e^{j\alpha_n} - h_4 je^{j\alpha_n} \quad .$$

Therefore, the equivalent channel of the pilot symbol is different from the equivalent channel of the data symbol, which affects demodulation of data.

Therefore, in an embodiment of the present invention, the channel estimation at the network side may be performed in the following manner: The pilot symbol is sent according to a pilot with two ports (rank 2), where a precoding vector of a first pilot port is $\begin{bmatrix} 1 \\ 1 \\ 0 \\ 0 \end{bmatrix}$ and a precoding vector of a second pilot port is $\begin{bmatrix} 0 \\ 0 \\ 1 \\ -j \end{bmatrix}$. Therefore, it is assumed that, a channel obtained according to port 1 by a certain receiving antenna at the network side is $\hat{h}_1$ and a channel obtained according to port 2 is $\hat{h}_2$, so a channel of symbol 1 is $\hat{h}_1 + \hat{h}_2 e^{j\alpha_1}$, a channel of symbol 2 is $\hat{h}_1 + \hat{h}_2 e^{j\alpha_2}$, a channel of symbol 3 is $\hat{h}_1 + \hat{h}_2 e^{j\alpha_3}$, a channel of symbol 4 is $\hat{h}_1 + \hat{h}_2 e^{j\alpha_4}$, a channel of symbol 5 is $\hat{h}_1 + \hat{h}_2 e^{j\alpha_5}$, and a channel of symbol 6 is $\hat{h}_1 + \hat{h}_2 e^{j\alpha_6}$.

When $\alpha_1 = \alpha_2 = \alpha_3 = \alpha_4 = \alpha_5 = \alpha_6 = 0$, the precoding matrix turns into $\begin{bmatrix} 1 \\ 1 \\ 1 \\ -j \end{bmatrix}$, which is equivalent to that, a non-zero element in each row is directly read from the rank 2 precoding matrix $\begin{bmatrix} 1 & 0 \\ 1 & 0 \\ 0 & 1 \\ 0 & -j \end{bmatrix}$ in initial transmission as a precoding weighted value of each antenna (an antenna corresponds to a row), and then precoding weighted values of all antennas are synthesized into a column vector, which is used as a rank 1 precoding matrix, thereby obtaining the precoding matrix

$$\begin{bmatrix} 1 \\ 1 \\ 1 \\ -j \end{bmatrix}.$$

In this case, the number of pilots and the number of layers of data (the number of columns of the precoding matrix) in the retransmission are the same, and only one pilot port needs to be used.

A precoding matrix of slot 2n+1 in FIG. 2 may be the precoding matrix used in the slot 2n. In another embodiment of the present invention, 12 data symbols included in the sub-frame may also use different phase values $\alpha_1$ to $\alpha_{12}$ separately.

To sum up, when four sending antennas exist and the initial transmission is the rank 2 transmission, the precoding matrix (or precoding code book) may be represented in a form of $\begin{bmatrix} a & 0 \\ b & 0 \\ 0 & c \\ 0 & d \end{bmatrix}$ or $\begin{bmatrix} 0 & c \\ 0 & d \\ a & 0 \\ b & 0 \end{bmatrix}$, where a, b, c, and d may be complex numbers with equal modules, that is, $|a| = |b| = |c| = |d|$. When a rank 2 precoding code book for the

initial transmission is $\begin{bmatrix} a & 0 \\ b & 0 \\ 0 & c \\ 0 & d \end{bmatrix}$, if the retransmission is the rank 1 transmission, the relationship between antenna 1 and antenna 2 remains unchanged and the relationship between antenna 3 and antenna 4 remains unchanged, but a certain phase relationship exists between antennas 1 and 2 and antennas 3 and 4.

$$\begin{bmatrix} a & 0 \\ b & 0 \\ 0 & c \\ 0 & d \end{bmatrix} \xrightarrow{\substack{\text{A rank 2 precoding matrix turns into} \\ \text{a rank 1 precoding matrix}}} \begin{bmatrix} ae^{j\alpha_1} \\ be^{j\alpha_1} \\ ce^{j\alpha_2} \\ de^{j\alpha_2} \end{bmatrix} = e^{j\alpha_1} \begin{bmatrix} a \\ b \\ ce^{j(\alpha_2-\alpha_1)} \\ de^{j(\alpha_2-\alpha_1)} \end{bmatrix} = e^{j\alpha_2} \begin{bmatrix} ae^{j(\alpha_1-\alpha_2)} \\ be^{j(\alpha_1-\alpha_2)} \\ c \\ d \end{bmatrix}$$

A precoding matrix obtained by multiplying all elements in a precoding matrix by a scalar ($e^{j\alpha_1}$ or $e^{j\alpha_2}$ in this embodiment) with a module of 1 is equivalent to the original precoding matrix, and therefore,

$$e^{j\alpha_1} \begin{bmatrix} a \\ b \\ ce^{j(\alpha_2-\alpha_1)} \\ de^{j(\alpha_2-\alpha_1)} \end{bmatrix} \xrightarrow[\substack{\text{is equivalent} \\ \text{to}}]{\alpha = (\alpha_2 - \alpha_1)} \begin{bmatrix} a \\ b \\ ce^{j\alpha} \\ de^{j\alpha} \end{bmatrix}$$

and

$$e^{j\alpha_2} \begin{bmatrix} ae^{j(\alpha_1-\alpha_2)} \\ be^{j(\alpha_1-\alpha_2)} \\ c \\ d \end{bmatrix} \xrightarrow[\substack{\text{is equivalent} \\ \text{to}}]{\alpha = (\alpha_1 - \alpha_2)} \begin{bmatrix} ae^{j\alpha} \\ be^{j\alpha} \\ c \\ d \end{bmatrix}.$$

When the rank 2 precoding matrix for the initial transmission is $\begin{bmatrix} 0 & c \\ 0 & d \\ a & 0 \\ b & 0 \end{bmatrix}$, a form of the rank 1 precoding matrix for the retransmission is similar to that of the precoding matrix being $\begin{bmatrix} a & 0 \\ b & 0 \\ 0 & c \\ 0 & d \end{bmatrix}$, and will not be described again. A retransmission method provided in another embodiment of the present invention is described in the following. The embodiment describes a case of two-antenna transmission, where initial transmission is rank 2 transmission, and retransmission is rank 1 transmission. For the two-antenna, only one precoding matrix is an identity matrix $\begin{bmatrix} 1 & 0 \\ 0 & 1 \end{bmatrix}$ in a case of the rank of 2, and a precoding matrix of the retransmission may be represented as $\begin{bmatrix} 1 \\ e^{j\alpha_k} \end{bmatrix}$. In an embodiment of the present invention, a precoding matrix of symbol 1 is $\begin{bmatrix} 1 \\ e^{j0} \end{bmatrix}$, a precoding matrix of symbol 2 is $\begin{bmatrix} 1 \\ e^{j\frac{\pi}{4}} \end{bmatrix}$, a precoding matrix of symbol 3 is $\begin{bmatrix} 1 \\ e^{j\frac{2\pi}{4}} \end{bmatrix}$, a precoding matrix of symbol 4 is $\begin{bmatrix} 1 \\ e^{j\frac{3\pi}{4}} \end{bmatrix}$, a precoding matrix of symbol 5 may be the same as the precoding matrix of symbol 1, and a precoding matrix of symbol 6 may be the same as the precoding matrix of symbol 2.

It can be known from the forgoing that, in this embodiment, after receiving a retransmission indication, a precoding matrix of each symbol of one channel-coded codeword to be retransmitted may be determined according to a preset phase of each symbol, so as to determine a precoding matrix for the retransmission when no uplink grant signaling is received, thereby completing the retransmission when no uplink grant signaling is sent, and reducing an overhead for sending the uplink grant signaling. Moreover, because a phase relationship of each symbol is fixed, the determined precoding matrix is unique, so that a network side can correctly perform channel estimation.

A retransmission method provided in another embodiment of the present invention is described in the following. The embodiment describes a case of a four-antenna code book, where initial transmission is rank 3 transmission, and retransmission is rank 1 transmission. Because a rank 3 code book is not determined currently, in this embodiment, it is assumed that the rank 3 code book is a CMP code book. In this way, only one non-zero element exists in each row of the precoding matrix. It is assumed that, a rank 3 precoding matrix is $\begin{bmatrix} 0 & 1 & 0 \\ 0 & 0 & 1 \\ 1/\sqrt{2} & 0 & 0 \\ -1/\sqrt{2} & 0 & 0 \end{bmatrix} \cdot \sqrt{2}$ in a first column $\begin{bmatrix} 0 \\ 0 \\ 1/\sqrt{2} \\ -1/\sqrt{2} \end{bmatrix}$ of the rank 3 precoding matrix mainly functions for normalization, and indicates that a module of a column vector in each column is the same. If a normalization factor ( $\sqrt{2}$ ) is not considered, $\begin{bmatrix} 0 & 1 & 0 \\ 0 & 0 & 1 \\ 1/\sqrt{2} & 0 & 0 \\ -1/\sqrt{2} & 0 & 0 \end{bmatrix}$ is equivalent

to $\begin{bmatrix} 0 & 1 & 0 \\ 0 & 0 & 1 \\ 1 & 0 & 0 \\ -1 & 0 & 0 \end{bmatrix}$. The code book for the initial transmission indicates that antenna 3 and antenna 4 are used for transmission of a first layer, only antenna 1 is used for transmission of a second layer, and only antenna 2 is used for transmission of a third layer. Antenna 3 and antenna 4 are used as a group (antenna group 1), antenna 1 is used as a group (antenna group 2), and antenna 2 is used as a group (antenna group 3). When the retransmission is rank 1, a phase relationship among the three antenna groups may be $\begin{bmatrix} 0 & 1 & 0 \\ 0 & 0 & 1 \\ 1 & 0 & 0 \\ -1 & 0 & 0 \end{bmatrix} -> \begin{bmatrix} e^{j\alpha_1} & & & \\ & e^{j\alpha_2} & & \\ & & 1 & \\ & & & 1 \end{bmatrix}\begin{bmatrix} 1 \\ 1 \\ 1 \\ -1 \end{bmatrix}$, so a rank

1 phase relationship is $\begin{bmatrix} 1 \times e^{j\alpha_1} \\ 1 \times e^{j\alpha_2} \\ 1 \\ -1 \end{bmatrix}$. Therefore, in an embodiment of the present invention, a rank 1 precoding matrix of each symbol is as follows: A precoding matrix of symbol 1 is $\begin{bmatrix} 1 \times e^{j\alpha_{11}} \\ 1 \times e^{j\alpha_{12}} \\ 1 \\ -1 \end{bmatrix}$, a precoding matrix of symbol 2 is $\begin{bmatrix} 1 \times e^{j\alpha_{21}} \\ 1 \times e^{j\alpha_{22}} \\ 1 \\ -1 \end{bmatrix}$,

a precoding matrix of symbol 3 is $\begin{bmatrix} 1 \times e^{j\alpha_{31}} \\ 1 \times e^{j\alpha_{32}} \\ 1 \\ -1 \end{bmatrix}$, a precoding matrix of symbol 4 is $\begin{bmatrix} 1 \times e^{j\alpha_{41}} \\ 1 \times e^{j\alpha_{42}} \\ 1 \\ -1 \end{bmatrix}$, a precoding matrix of

symbol 5 is $\begin{bmatrix} 1 \times e^{j\alpha_{51}} \\ 1 \times e^{j\alpha_{52}} \\ 1 \\ -1 \end{bmatrix}$, and a precoding matrix of symbol 6 is $\begin{bmatrix} 1 \times e^{j\alpha_{61}} \\ 1 \times e^{j\alpha_{62}} \\ 1 \\ -1 \end{bmatrix}$. In the foregoing description, it is assumed that, the rank 1 precoding matrix used on each symbol is $\begin{bmatrix} 1 \times e^{j\alpha_1} \\ 1 \times e^{j\alpha_2} \\ 1 \\ -1 \end{bmatrix}$, where $\alpha_1$ may be fixed to a certain fixed value (each symbol is not varied in the embodiment). It is assumed that the fixed value is 0, and the precoding matrix turns

into $\begin{bmatrix} 1 \\ 1 \times e^{j\alpha_2} \\ 1 \\ -1 \end{bmatrix}$, that is, only $\alpha_2$ is a variable. In this case, the precoding matrices of the six symbols are $\begin{bmatrix} 1 \\ 1 \times e^{j\alpha_{12}} \\ 1 \\ -1 \end{bmatrix}$,

$\begin{bmatrix} 1 \\ 1 \times e^{j\alpha_{22}} \\ 1 \\ -1 \end{bmatrix}$, $\begin{bmatrix} 1 \\ 1 \times e^{j\alpha_{32}} \\ 1 \\ -1 \end{bmatrix}$, $\begin{bmatrix} 1 \\ 1 \times e^{j\alpha_{42}} \\ 1 \\ -1 \end{bmatrix}$, $\begin{bmatrix} 1 \\ 1 \times e^{j\alpha_{52}} \\ 1 \\ -1 \end{bmatrix}$ and $\begin{bmatrix} 1 \\ 1 \times e^{j\alpha_{62}} \\ 1 \\ -1 \end{bmatrix}$ respectively. In another embodiment of the

present invention, $\alpha_2$ may also be fixed to a certain fixed value. It is assumed that the fixed value is 0, and the precoding

matrix turns into $\begin{bmatrix} 1 \times e^{j\alpha_1} \\ 1 \\ 1 \\ -1 \end{bmatrix}$, that is, only $\alpha_1$ is a variable. In another embodiment of the present invention, $\alpha_1$ and $\alpha_2$

may be both fixed to certain fixed values, which are both assumed to be 0, and the precoding matrix on each symbol is

$\begin{bmatrix} 1 \\ 1 \\ 1 \\ -1 \end{bmatrix}$.

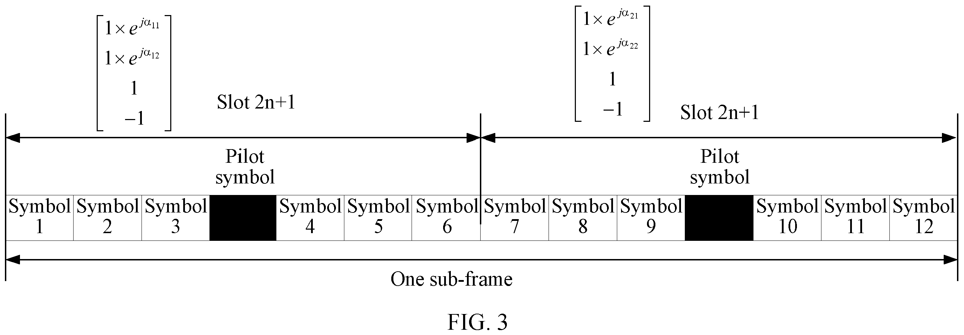

When the $\begin{bmatrix} 1 \times e^{j\alpha_1} \\ 1 \times e^{j\alpha_2} \\ 1 \\ -1 \end{bmatrix}$ is used as the precoding matrix, if a phase of each symbol is different, the number of pilot ports in the retransmission needs to be the same as that in the initial transmission. If phases of $\alpha_1$ and $\alpha_2$ of each symbol in one slot are the same, only one pilot port may be used for retransmission. FIG. 3 describes a structure of a sub-frame in another embodiment of the present invention. As shown in FIG. 3, a sub-frame includes slots 2n (n is an integer) and 2n+1, one slot includes six symbols and one pilot symbol. Slot 2n includes symbols 1 to 6, and slot 2n+1 includes symbols 7 to 12. $\begin{bmatrix} 1 \times e^{j\alpha_{11}} \\ 1 \times e^{j\alpha_{12}} \\ 1 \\ -1 \end{bmatrix}$ is used as a precoding matrix of each symbol in slot 2n, and $\begin{bmatrix} 1 \times e^{j\alpha_{21}} \\ 1 \times e^{j\alpha_{22}} \\ 1 \\ -1 \end{bmatrix}$ is used

as a precoding matrix of each symbol in slot 2n+1.

It can be known from the foregoing that, when the retransmission is rank 1 transmission and the initial transmission is rank r (r=2) transmission, antennas may be divided into r groups. Each column of a precoding matrix for the initial transmission corresponds to one group. In any group, a phase relationship among antennas remains unchanged (or a precoding vector remains unchanged), and only a phase relationship among the antenna groups needs to be adjusted. The phase relationship among the antenna groups may be partially the same between different symbols or may vary between different symbols. For example, in FIG. 2, phases between antenna groups of symbols in one slot are the same, but phases between antenna groups of symbols in different slots are different.

Because there are only one pilot symbol in one slot, if a phase relationship among antenna groups in one slot is fixed, the number of ports required to retransmit a pilot is the same as a rank of the precoding matrix used in the retransmission. For example, when there is one pilot port in the rank 1 retransmission. If the phase relationship among the antenna groups in one slot is unfixed, at least two pilot ports are required in the retransmission, and the specific number of pilot ports is determined according to the number of variable parameters $\alpha_i$. For example, when the initial transmission is rank 3, and the precoding matrix is

$$\begin{bmatrix} 0 & 1 & 0 \\ 0 & 0 & 1 \\ 1/\sqrt{2} & 0 & 0 \\ -1/\sqrt{2} & 0 & 0 \end{bmatrix},$$

in an embodiment of the present invention, the rank 1 precoding matrix is

$$\begin{bmatrix} 1 \times e^{j\alpha_1} \\ 1 \times e^{j\alpha_2} \\ 1 \\ -1 \end{bmatrix}.$$

In this case, if $\alpha_1$ and $\alpha_2$ are not exactly the same in each symbol in one slot, three pilot ports are required, and precoding vectors used by the three pilot ports may be

$$\begin{bmatrix} 1 \\ 0 \\ 0 \\ 0 \end{bmatrix}, \begin{bmatrix} 0 \\ 1 \\ 0 \\ 0 \end{bmatrix}, \text{ and } \begin{bmatrix} 0 \\ 0 \\ 1 \\ -1 \end{bmatrix}.$$

Therefore, it is assumed that, a channel obtained by a certain receiving antenna at a network side according to port 1 is $\hat{h}_1$, a channel obtained according to port 2 is $\hat{h}_2$, and a channel obtained according to port 3 is $\hat{h}_3$, and it is assumed that, $\alpha_1$ and $\alpha_2$ are phase values used by a certain data symbol, so an equivalent channel corresponding to the data symbol of the receiving antenna is $\hat{h}_1 e^{j\alpha_1} + \hat{h}_2 e^{j\alpha_2} + \hat{h}_3$. In another embodiment of the present invention, the rank 1 precoding matrix is

$$\begin{bmatrix} 1 \times e^{j\alpha_1} \\ 1 \times e^{j\alpha_2} \\ 1 \\ -1 \end{bmatrix},$$

and at least one of $\alpha_1$ and $\alpha_2$ is a fixed value in one slot. That $\alpha_1$ is fixed to 0 is taken as an example. The precoding matrix turns into

$$\begin{bmatrix} 1 \\ 1 \times e^{j\alpha_2} \\ 1 \\ -1 \end{bmatrix}.$$

In this case, if $\alpha_2$ is not exactly the same in one slot, two pilot ports are required. For example, port 1 may use a precoding vector

$$\begin{bmatrix} 1 \\ 0 \\ 1 \\ -1 \end{bmatrix}$$

and port 2 may use a precoding vector

$$\begin{bmatrix} 0 \\ 1 \\ 0 \\ 0 \end{bmatrix}.$$

If a channel obtained by a certain receiving antenna at the network side according to port 1 is $\hat{h}_1$ and a channel according to port 2 is $\hat{h}_2$, and it is assumed that, $\alpha_2$ is a phase value used by a certain data symbol, so an equivalent channel corresponding to the data symbol of the receiving antenna is $\hat{h}_1 + \hat{h}_2 e^{j\alpha_2}$.

Therefore, when a precoding matrix used by each data symbol in one slot is different, the number of required pilot ports differs according to the different number of varied phases. Specifically, the number of required pilot ports may be the number of varied phases plus 1, that is, may be the number of pilot ports in the initial transmission at most, and may be one at least. In the forgoing embodiment, when $\alpha_1$ and $\alpha_2$ vary in each symbol in one slot, the number of pilot ports in the retransmission is three. When one of $\alpha_1$ and $\alpha_2$ is fixed, the number of pilot ports in the retransmission is two. When $\alpha_1$ and $\alpha_2$ are both fixed, one pilot port in the retransmission exists.

In an embodiment of the present invention, a variant of the precoding matrix $\begin{bmatrix} 1 \times e^{j\alpha_1} \\ 1 \times e^{j\alpha_2} \\ 1 \\ -1 \end{bmatrix}$ may be represented

as $\begin{bmatrix} 1 \\ 1 \times e^{j\alpha_1} \\ 1 \times e^{j\alpha_2} \\ -1 \times e^{j\alpha_2} \end{bmatrix}$ and $\begin{bmatrix} 1 \times e^{j\alpha_1} \\ 1 \\ 1 \times e^{j\alpha_2} \\ -1 \times e^{j\alpha_2} \end{bmatrix}$, that is, the precoding matrices $\begin{bmatrix} 1 \\ 0 \\ 0 \\ 0 \end{bmatrix} \begin{bmatrix} 0 \\ 1 \\ 0 \\ 0 \end{bmatrix}$ and $\begin{bmatrix} 0 \\ 0 \\ 1 \\ -1 \end{bmatrix}$ corresponding to the three antenna groups are synthesized into a rank 1 precoding matrix, and a relationship among antennas of the three antenna groups may be represented by two phase values.

To sum up, when four sending antennas exist, the initial transmission is rank 3, and the retransmission is rank 1, the code book for the initial transmission may be represented in a form of $\begin{bmatrix} a & 0 & 0 \\ b & 0 & 0 \\ 0 & c & 0 \\ 0 & 0 & d \end{bmatrix}$ (or $\begin{bmatrix} a/\sqrt{2} & 0 & 0 \\ b/\sqrt{2} & 0 & 0 \\ 0 & c & 0 \\ 0 & 0 & d \end{bmatrix}$) or

$\begin{bmatrix} 0 & a & 0 \\ 0 & 0 & b \\ c & 0 & 0 \\ d & 0 & 0 \end{bmatrix}$ (or $\begin{bmatrix} 0 & a & 0 \\ 0 & 0 & b \\ c/\sqrt{2} & 0 & 0 \\ d/\sqrt{2} & 0 & 0 \end{bmatrix}$), and a row/column substitution form of the foregoing form. For example, after

column transformation, $\begin{bmatrix} a & 0 & 0 \\ b & 0 & 0 \\ 0 & c & 0 \\ 0 & 0 & d \end{bmatrix}$ may turn into $\begin{bmatrix} 0 & a & 0 \\ 0 & b & 0 \\ c & 0 & 0 \\ 0 & 0 & d \end{bmatrix}$, where a, b, c, and d may be complex numbers with equal modules, that is, $|a| = |b| = |c| = |d|$. The following is described in a case that a form of the rank 3 precoding matrix for the initial transmission is $\begin{bmatrix} a & 0 & 0 \\ b & 0 & 0 \\ 0 & c & 0 \\ 0 & 0 & d \end{bmatrix}$. Referring to processing in a case that the initial transmission is rank 2 and the retransmission is rank 1, a form of a rank 1 precoding matrix is shown in the following:

$$\begin{bmatrix} a & 0 & 0 \\ b & 0 & 0 \\ 0 & c & 0 \\ 0 & 0 & d \end{bmatrix} \xrightarrow{\substack{\text{The initial} \\ \text{transmission is rank} \\ \text{3 and the} \\ \text{retransmission is} \\ \text{rank 1.}}} \begin{bmatrix} ae^{j\beta_1} \\ be^{j\beta_1} \\ ce^{j\beta_2} \\ de^{j\beta_3} \end{bmatrix} = e^{j\beta_1} \begin{bmatrix} a \\ b \\ ce^{j(\beta_2-\beta_1)} \\ de^{j(\beta_3-\beta_1)} \end{bmatrix} \xrightarrow{\substack{\alpha_1 = (\beta_2-\beta_1) \\ \alpha_2 = (\beta_3-\beta_1) \\ \text{is equivalent} \\ \text{to}}} \begin{bmatrix} a \\ b \\ ce^{j\alpha_1} \\ de^{j\alpha_2} \end{bmatrix}.$$

Similarly, by extracting different common factors $e^{j\beta_2}$ and $e^{j\beta_3}$ from $\begin{bmatrix} ae^{j\beta_1} \\ be^{j\beta_1} \\ ce^{j\beta_2} \\ de^{j\beta_3} \end{bmatrix}$, other variants of the rank 1 precoding matrix may further be obtained, for example, $\begin{bmatrix} ae^{j\alpha_1} \\ be^{j\alpha_1} \\ c \\ de^{j\alpha_2} \end{bmatrix}$, $\begin{bmatrix} ae^{j\alpha_1} \\ be^{j\alpha_1} \\ ce^{j\alpha_2} \\ d \end{bmatrix}$, and so on.

It can be known from the forgoing that, in this embodiment, after receiving an retransmission indication, a precoding matrix of each symbol of one channel-coded codeword to be retransmitted may be determined according to a preset phase of each symbol, so as to determine a precoding matrix for the retransmission when no uplink grant signaling is received, thereby completing the retransmission when no uplink grant signaling is sent, and reducing an overhead for sending the uplink grant signaling. Moreover, because a phase relationship of each symbol is fixed, the determined precoding matrix is unique, so that the network side can correctly perform channel estimation.

A retransmission method provided in another embodiment of the present invention is described in the following. The embodiment describes a case of a four-antenna code book, where initial transmission is rank 3 transmission, and retransmission is rank 2 transmission. That a rank 3 code book is a CMP code book is taken as an example for description.

In this embodiment, it is assumed that a rank 3 precoding matrix is $\begin{bmatrix} 0 & 1 & 0 \\ 0 & 0 & 1 \\ 1/\sqrt{2} & 0 & 0 \\ -1/\sqrt{2} & 0 & 0 \end{bmatrix}$, that is, a certain layer of the rank 3 code book is transmitted by using two antennas, and other two layers are transmitted by using single antennas. When the retransmission is rank 2 transmission, power of each layer in the retransmission is the same, a precoding vector of one layer may be a vector obtained by normalizing the layer which is in the rank 3 code book and uses two antennas, and a precoding vector of the other layer is a vector obtained by merging layers that is in the rank 3 code book and uses single antennas, so a rank 2 precoding matrix is $\begin{bmatrix} 0 & 1 \\ 0 & e^{j\alpha} \\ 1 & 0 \\ -1 & 0 \end{bmatrix}$, where a vector $\begin{bmatrix} 0 \\ 0 \\ 1 \\ -1 \end{bmatrix}$ is obtained by normalizing a vector $\begin{bmatrix} 0 \\ 0 \\ 1/\sqrt{2} \\ -1/\sqrt{2} \end{bmatrix}$, and a vector $\begin{bmatrix} 1 \\ e^{j\alpha} \\ 0 \\ 0 \end{bmatrix}$ is obtained by merging a vector $\begin{bmatrix} 1 \\ 0 \\ 0 \\ 0 \end{bmatrix}$ and a vector $\begin{bmatrix} 0 \\ 1 \\ 0 \\ 0 \end{bmatrix}$. Therefore, in an embodiment of the present invention, a rank 2 precoding matrix of each symbol is as follows: A precoding matrix of symbol 1 is $\begin{bmatrix} 0 & 1 \\ 0 & e^{j\alpha_1} \\ 1 & 0 \\ -1 & 0 \end{bmatrix}$, a precoding matrix of symbol 2 is $\begin{bmatrix} 0 & 1 \\ 0 & e^{j\alpha_2} \\ 1 & 0 \\ -1 & 0 \end{bmatrix}$, a precoding matrix of symbol 3 is

$\begin{bmatrix} 0 & 1 \\ 0 & e^{j\alpha_3} \\ 1 & 0 \\ -1 & 0 \end{bmatrix}$, a precoding matrix of symbol 4 is $\begin{bmatrix} 0 & 1 \\ 0 & e^{j\alpha_4} \\ 1 & 0 \\ -1 & 0 \end{bmatrix}$, a precoding matrix of symbol 5 is $\begin{bmatrix} 0 & 1 \\ 0 & e^{j\alpha_5} \\ 1 & 0 \\ -1 & 0 \end{bmatrix}$ and

a precoding matrix of symbol 6 is $\begin{bmatrix} 0 & 1 \\ 0 & e^{j\alpha_6} \\ 1 & 0 \\ -1 & 0 \end{bmatrix}$.

Similarly, other types of expressions, $\begin{bmatrix} 0 & e^{j\alpha} \\ 0 & 1 \\ 1 & 0 \\ -1 & 0 \end{bmatrix}$, $\begin{bmatrix} 1 & 0 \\ e^{j\alpha} & 0 \\ 0 & 1 \\ 0 & -1 \end{bmatrix}$ and $\begin{bmatrix} e^{j\alpha} & 0 \\ 1 & 0 \\ 0 & 1 \\ 0 & -1 \end{bmatrix}$ of $\begin{bmatrix} 0 & 1 \\ 0 & e^{j\alpha} \\ 1 & 0 \\ -1 & 0 \end{bmatrix}$ may

also be obtained, where the matrix $\begin{bmatrix} 1 & 0 \\ e^{j\alpha} & 0 \\ 0 & 1 \\ 0 & -1 \end{bmatrix}$ is obtained by performing column substitution on the matrix

$\begin{bmatrix} 0 & 1 \\ 0 & e^{j\alpha} \\ 1 & 0 \\ -1 & 0 \end{bmatrix}$, and the matrix $\begin{bmatrix} e^{j\alpha} & 0 \\ 1 & 0 \\ 0 & 1 \\ 0 & -1 \end{bmatrix}$ is obtained by performing column substitution on the matrix $\begin{bmatrix} 0 & e^{j\alpha} \\ 0 & 1 \\ 1 & 0 \\ -1 & 0 \end{bmatrix}$.

When four antenna ports are used for sending, the initial transmission is the rank 3 transmission, and the retransmission is the rank 2 transmission, it is assumed that a precoding matrix of the initial transmission is

$\begin{bmatrix} 0 & 1 & 0 \\ 0 & 0 & 1 \\ 1/\sqrt{2} & 0 & 0 \\ -1/\sqrt{2} & 0 & 0 \end{bmatrix}$, and the precoding matrix may be represented as $\begin{bmatrix} 0 & 1 & 0 \\ 0 & 0 & 1 \\ 1 & 0 & 0 \\ -1 & 0 & 0 \end{bmatrix}$ after removing a normalization factor $\sqrt{2}$ at a first layer. The first layer is sent by using two antennas and second and third layers are both sent by using one antenna. Therefore, during the rank 2 retransmission, the layer sent by using two antennas is retained, that is, a column of the precoding matrix for the retransmission is $\begin{bmatrix} 0 \\ 0 \\ 1 \\ -1 \end{bmatrix};$ the other column of the precoding matrix for the retransmission is formed by merging two layers which are of the precoding matrix for the initial transmission and are sent by using one sending antenna, that is, the other column of the precoding matrix for the retransmission is $\begin{bmatrix} 1 \\ e^{j\alpha} \\ 0 \\ 0 \end{bmatrix}.$

Therefore, the rank 2 precoding matrix for the retransmission may be $\begin{bmatrix} 0 & 1 \\ 0 & e^{j\alpha} \\ 1 & 0 \\ -1 & 0 \end{bmatrix}.$

When the initial transmission is the rank 3 transmission and the retransmission is the rank 2 transmission, a column which is of the precoding matrix for the initial transmission and is sent by using two antennas may be retained as one column of the precoding matrix for the retransmission, and the other column of the precoding matrix for the retransmission is formed by merging two columns which are of the precoding matrix for the initial transmission and are each sent by using one sending antenna. Therefore, when $\alpha$ differs in a precoding matrix used by each data symbol in one slot, the number of required pilot ports differs according to the different number of varied phases, and specifically, may be the number of varied phases plus 2. For example, when $\alpha$ is fixed between different symbols in one slot, two pilot ports are required, and when $\alpha$ is different in different symbols in one slot, three pilot ports are required, where the principle is consistent with that in description where the retransmission is rank 1, and will not be described again.

To sum up, when four sending antennas exist, the initial transmission is the rank 3 transmission, and the retransmission is the rank 2 transmission, the code book for the initial transmission may be represented in a form of

$\begin{bmatrix} a & 0 & 0 \\ b & 0 & 0 \\ 0 & c & 0 \\ 0 & 0 & d \end{bmatrix}$ (or $\begin{bmatrix} a/\sqrt{2} & 0 & 0 \\ b/\sqrt{2} & 0 & 0 \\ 0 & c & 0 \\ 0 & 0 & d \end{bmatrix}$) or $\begin{bmatrix} 0 & a & 0 \\ 0 & 0 & b \\ c & 0 & 0 \\ d & 0 & 0 \end{bmatrix}$ (or $\begin{bmatrix} 0 & a & 0 \\ 0 & 0 & b \\ c/\sqrt{2} & 0 & 0 \\ d/\sqrt{2} & 0 & 0 \end{bmatrix}$), and a row/column substitution form of the foregoing form, such as $\begin{bmatrix} 0 & a & 0 \\ 0 & b & 0 \\ c & 0 & 0 \\ 0 & 0 & d \end{bmatrix},$ where a, b, c, and d may be complex numbers with equal modules, that is, $|a| = |b| = |c| = |d|$. The following is described in the case that a form of the rank 3 precoding matrix for the initial transmission

is $\begin{bmatrix} a & 0 & 0 \\ b & 0 & 0 \\ 0 & c & 0 \\ 0 & 0 & d \end{bmatrix}.$ Referring to processing in a case that the initial transmission is rank 2 transmission and the retransmission is rank 1 transmission, a precoding matrix during retransmission being rank 2 transmission is shown in the following:

$$\begin{bmatrix} a & 0 & 0 \\ b & 0 & 0 \\ 0 & c & 0 \\ 0 & 0 & d \end{bmatrix} \xrightarrow{\substack{\text{The initial} \\ \text{transmission is rank} \\ \text{3 and the} \\ \text{retransmission is} \\ \text{rank 2.}}} \begin{bmatrix} ae^{j\beta_1} & 0 \\ be^{j\beta_1} & 0 \\ 0 & ce^{j\beta_2} \\ 0 & de^{j\beta_3} \end{bmatrix} = \begin{bmatrix} e^{j\beta_1}\begin{bmatrix} a \\ b \end{bmatrix} & 0 \\ & 0 \\ 0 & e^{j\beta_2}\begin{bmatrix} c \\ be^{j(\beta_3-\beta_2)} \end{bmatrix} \end{bmatrix}.$$

Also, a matrix obtained by multiplying all elements in a precoding matrix by a complex number with a module of 1 is equivalent to the original matrix, and therefore,

$$\begin{bmatrix} e^{j\beta_1}\begin{bmatrix} a \\ b \end{bmatrix} & 0 \\ & 0 \\ 0 & e^{j\beta_2}\begin{bmatrix} c \\ be^{j(\beta_3-\beta_2)} \end{bmatrix} \end{bmatrix} \xrightarrow{\substack{\alpha = (\beta_3 - \beta_2) \\ \text{is equivalent} \\ \text{to}}} \begin{bmatrix} a & 0 \\ b & 0 \\ 0 & c \\ 0 & de^{j\alpha} \end{bmatrix}.$$

Similarly, other variants, such as $\begin{bmatrix} a & 0 \\ b & 0 \\ 0 & ce^{j\alpha} \\ 0 & d \end{bmatrix}$, of the rank 2 precoding matrix may further be obtained.

It can be known from the forgoing that, in this embodiment, after receiving a retransmission indication, a precoding matrix of each symbol of one channel-coded codeword to be retransmitted may be determined according to a preset phase of each symbol, so as to determine a precoding matrix for the retransmission when no uplink grant signaling is received, thereby completing the retransmission when no uplink grant signaling is sent, and reducing an overhead for sending the uplink grant signaling. Moreover, because a phase relationship of each symbol is fixed, the determined precoding matrix is unique, so that a network side can correctly perform the channel estimation.

A retransmission method provided in another embodiment of the present invention is described in the following. The embodiment describes a case of a four-antenna code book, where initial transmission is rank 4 transmission, and retransmission is rank 2 transmission. A rank 4 precoding matrix has only one identity matrix $\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ (

$\frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$, where $\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ may be obtained by removing a normalization factor $\frac{1}{2}$ ). Therefore, a phase relationship of each symbol cannot be obtained from the precoding matrix which is the identity matrix. The number of rank 2 code book codewords is fixed, so N (N < the number of rank 2 code book codewords) code book code may be selected as a precoding matrix of each symbol. In an embodiment of the present invention, a minimum chordal distance (chordal distance) of the selected N code book codewords is maximum. A chordal distance between any two code book codewords $\mathbf{u}_i$ and $\mathbf{u}_j$ is defined as:

$$d\left(\mathbf{u}_i, \mathbf{u}_j\right) = \frac{1}{\sqrt{2}}\left\|\mathbf{u}_i\mathbf{u}_i^H - \mathbf{u}_j\mathbf{u}_j^H\right\|_F, \text{ where } \left\|\mathbf{u}_i\right\|_F = \left\|\mathbf{u}_j\right\|_F = 1.$$

Therefore, in order to maximize the minimum chordal distance of the selected N code book codewords, the N code book codewords may be obtained through a search by using an exhaustion method, so as to maximize the minimum chordal distance of the N code book codewords. In an embodiment of the present invention, it is assumed that, N=6, and six code book codewords selected from rank 2 code book codewords are P1, P2, P3, P4, P5, and P6, so a rank 2 precoding matrix of each symbol is as follows. A precoding matrix of symbol 1 is P1, a precoding matrix of symbol 2 is P2, a precoding matrix of symbol 3 is P3, a precoding matrix of symbol 4 is P4, a precoding matrix of symbol 5 is P5, and a precoding matrix of symbol 6 is P6.

A retransmission method provided in another embodiment of the present invention is described in the following. The embodiment describes processing in a case that initial transmission is rank 4 transmission and retransmission is rank 2 transmission. A precoding matrix for the initial transmission is $\begin{bmatrix} 1 & 0 & 0 & 0 \\ 0 & 1 & 0 & 0 \\ 0 & 0 & 1 & 0 \\ 0 & 0 & 0 & 1 \end{bmatrix}$, which is similar to processing in a case that the initial transmission is rank 2 transmission and the retransmission is rank 1 transmission, and a precoding matrix for the retransmission may be represented as $\begin{bmatrix} 1 & 0 \\ e^{j\alpha_1} & 0 \\ 0 & 1 \\ 0 & e^{j\alpha_2} \end{bmatrix}$. That one slot includes six data symbols is taken as an example for description. Precoding matrices of symbol 1 to symbol 6 may be represented as: $\begin{bmatrix} 1 & 0 \\ e^{j\alpha_{1,1}} & 0 \\ 0 & 1 \\ 0 & e^{j\alpha_{2,1}} \end{bmatrix}$, $\begin{bmatrix} 1 & 0 \\ e^{j\alpha_{1,2}} & 0 \\ 0 & 1 \\ 0 & e^{j\alpha_{2,2}} \end{bmatrix}$, $\begin{bmatrix} 1 & 0 \\ e^{j\alpha_{1,3}} & 0 \\ 0 & 1 \\ 0 & e^{j\alpha_{2,3}} \end{bmatrix}$, $\begin{bmatrix} 1 & 0 \\ e^{j\alpha_{1,4}} & 0 \\ 0 & 1 \\ 0 & e^{j\alpha_{2,4}} \end{bmatrix}$, $\begin{bmatrix} 1 & 0 \\ e^{j\alpha_{1,5}} & 0 \\ 0 & 1 \\ 0 & e^{j\alpha_{2,5}} \end{bmatrix}$ and $\begin{bmatrix} 1 & 0 \\ e^{j\alpha_{1,6}} & 0 \\ 0 & 1 \\ 0 & e^{j\alpha_{2,6}} \end{bmatrix}$ respectively.

When $\alpha_1$ and $\alpha_2$ vary in each symbol in one slot, the number of pilot ports in the retransmission is four. When one of $\alpha_1$ and $\alpha_2$ is fixed, the number of pilot ports in the retransmission is three. When $\alpha_1$ and $\alpha_2$ are both fixed, the number of pilot ports in the retransmission is two.

Therefore, when a precoding matrix used by each data symbol in one slot differs, the number of required pilot ports differs according to the different number of varied phases, and specifically, may be the number of varied phases plus 2, that is, the number of required pilot ports may be the number of pilot ports in the initial transmission at most, and may be two at least. When $\alpha_1$ and $\alpha_2$ vary in each symbol in one slot, the number of pilot ports in the retransmission is four. When $\alpha_1$ or $\alpha_2$ is fixed, the number of pilot ports in the retransmission is three. When $\alpha_1$ and $\alpha_2$ are both fixed, the number of pilot ports in the retransmission is two.

Similarly as processing in a case that the initial transmission is rank 2 transmission and the retransmission is rank 1 transmission, the precoding matrix in the case where four sending antennas exists, the initial transmission is the rank 4 transmission, and the retransmission is the rank 2 transmission may be obtained. The code book for the initial transmission may be represented as $\begin{bmatrix} a & 0 & 0 & 0 \\ 0 & b & 0 & 0 \\ 0 & 0 & c & 0 \\ 0 & 0 & 0 & d \end{bmatrix}$, where a, b, c, and d may be complex numbers with equal modules, that is, $|a| = |b| = |c| = |d|$. The rank 2 precoding matrix for the retransmission may be $\begin{bmatrix} ae^{j\beta_1} & 0 \\ be^{j\beta_2} & 0 \\ 0 & ce^{j\beta_3} \\ 0 & de^{j\beta_4} \end{bmatrix}$ or a

row substitution or column substitution form, such as $\begin{bmatrix} ae^{j\beta_1} & 0 \\ 0 & be^{j\beta_2} \\ ce^{j\beta_3} & 0 \\ 0 & de^{j\beta_4} \end{bmatrix}$, of the matrix. For the same reason of processing in the case that the initial transmission is the rank 3 transmission and the retransmission is the rank 2 transmission,

$$\begin{bmatrix} ae^{j\beta_1} & 0 \\ be^{j\beta_2} & 0 \\ 0 & ce^{j\beta_3} \\ 0 & de^{j\beta_4} \end{bmatrix} \xrightarrow{\text{is equivalent to}} \begin{bmatrix} a & 0 \\ be^{j\alpha_1} & 0 \\ 0 & c \\ 0 & de^{j\alpha_2} \end{bmatrix}$$

may be obtained. Therefore, when $\alpha_1 = \alpha_2 = 0$, the precoding

matrix for the retransmission is $\begin{bmatrix} a & 0 \\ b & 0 \\ 0 & c \\ 0 & d \end{bmatrix}$. When the rank 4 precoding matrix is an identity matrix, that is, $a = b = c = d$ = 1, and

$$\begin{bmatrix} a & 0 \\ b & 0 \\ 0 & c \\ 0 & d \end{bmatrix} = \begin{bmatrix} 1 & 0 \\ 1 & 0 \\ 0 & 1 \\ 0 & 1 \end{bmatrix}.$$

To sum up, when the initial transmission is rank r transmission and the retransmission is rank z transmission (r is an integer, r≥2, z is an integer, z≥1, and r>z), the sending through the antennas may include that: antennas are divided into r antenna groups, where a phase relationship among antennas in an antenna group remains unchanged; if a phase relationship among the r antenna groups is fixed, sending may be performed through the antennas by using z demodulation pilot ports; if the phase relationship among the r antenna groups is unfixed, the number of unfixed phases is determined, and sending may be performed through the antennas by using demodulation pilot ports the number of which is z greater than the number of unfixed phases.

It can be known from the forgoing that, in this embodiment, after receiving a retransmission indication, a precoding matrix of each symbol of one channel-coded codeword to be retransmitted may be determined according to a preset phase of each symbol, so as to determine a precoding matrix for the retransmission when no uplink grant signaling is received, thereby completing the retransmission when no uplink grant signaling is sent, and reducing an overhead for sending the uplink grant signaling. Moreover, because a phase relationship of each symbol is fixed, the determined precoding matrix is unique, so that a network side can correctly perform channel estimation.

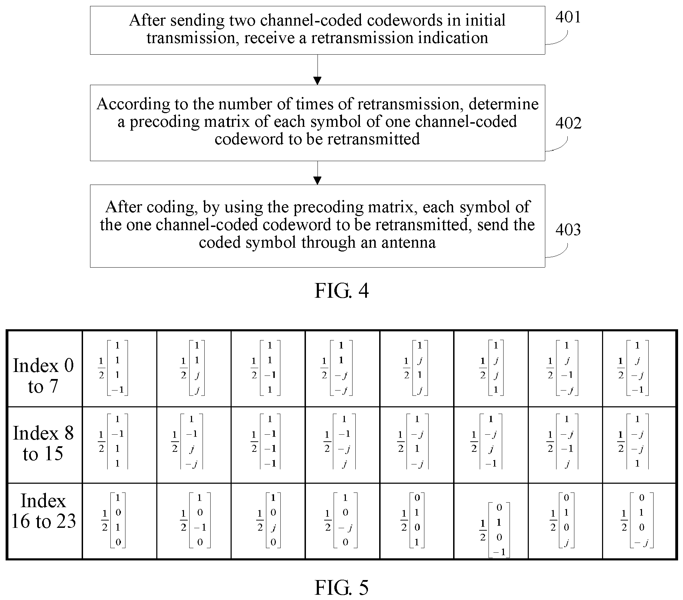

FIG. 4 describes a flow of a retransmission method provided in another embodiment of the present invention. The embodiment describes a processing flow of a user equipment, including:

401: After sending two channel-coded codewords in initial transmission, receive a retransmission indication, where the retransmission indication includes an identifier of one channel-coded codeword to be retransmitted.

402: According to the number of times of retransmission, determine a precoding matrix of each symbol of the one channel-coded codeword to be retransmitted, where the precoding matrix of each symbol of the one channel-coded codeword to be retransmitted is the same, and a phase of each symbol of the one channel-coded codeword to be retransmitted is the same.

In this embodiment, in retransmission at a time, the precoding matrix of each symbol of the one channel-coded codeword to be retransmitted is all the same, but precoding matrices in retransmission at different times may be different.

It is assumed that, the embodiment describes a case of four-antenna transmission, where the initial transmission is rank 2 transmission, and the retransmission is rank 1 transmission. In this situation, two codewords are transmitted in initial transmission and each codeword occupies one layer, but one codeword is wrongly transmitted and needs to be retransmitted.

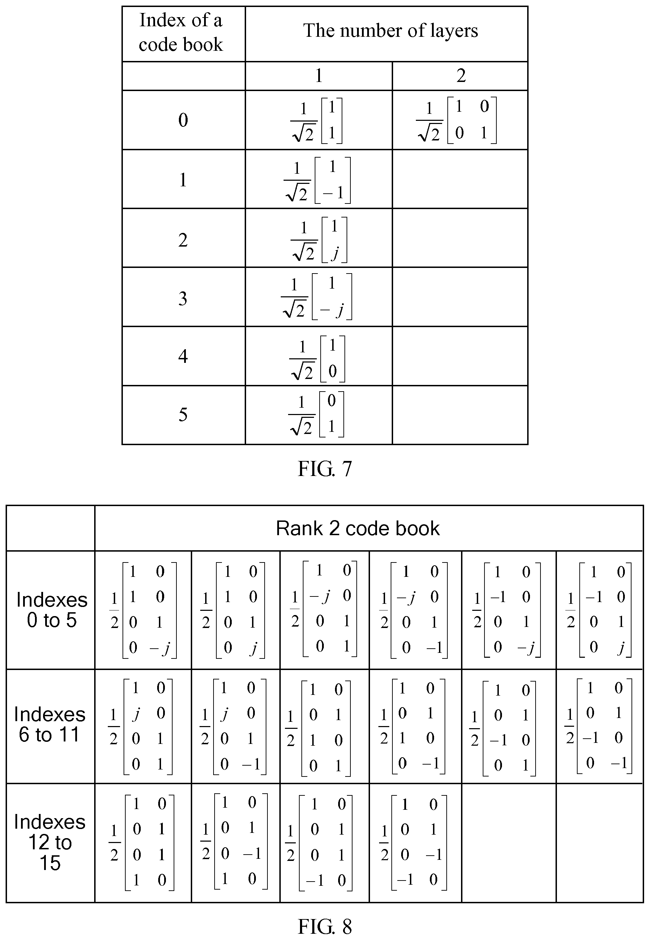

It is assumed that, the precoding matrix used in the initial transmission is $\begin{bmatrix} 1 & 0 \\ 1 & 0 \\ 0 & 1 \\ 0 & -j \end{bmatrix}$, as shown by an index 0 in FIG. 8 (a normalization factor 1/2 is omitted), which indicates that, in the initial transmission, antenna 1 and antenna 2 are used for a first layer and antenna 3 and antenna 4 are used for a second layer. Moreover, a relationship between antenna 1 and antenna 2 and a relationship between antenna 3 and antenna 4 can be obtained. Specific relationships may be shown in the following equation:

$$\begin{bmatrix} h_{11} & h_{12} & h_{13} & h_{14} \\ h_{21} & h_{22} & h_{23} & h_{24} \end{bmatrix} \begin{bmatrix} 1 & 0 \\ 1 & 0 \\ 0 & 1 \\ 0 & -j \end{bmatrix} = \begin{bmatrix} h_{11} + h_{12} & h_{13} - j * h_{14} \\ h_{21} + h_{22} & h_{23} - j * h_{24} \end{bmatrix}$$

$h_{i,j}$ represents a channel between an $i^{th}$ receiving antenna and an $j^{th}$ sending antenna, so if antenna 1 and antenna 2 are regarded as group 1, and antenna 3 and antenna 4 are regarded as group 2, a phase relationship between the two groups is shown in the following formula:

$$\begin{bmatrix} 1 & 0 \\ 1 & 0 \\ 0 & 1 \\ 0 & -j \end{bmatrix} \longrightarrow \begin{bmatrix} 1 & & & \\ & 1 & & \\ & & e^{j\alpha} & \\ & & & e^{j\alpha} \end{bmatrix} \begin{bmatrix} 1 \\ 1 \\ 1 \\ -j \end{bmatrix}$$

Therefore, in order to determine a precoding matrix during the retransmission, a phase relationship between antenna 1 and antenna 2 in the retransmission may remain the same as that in the initial transmission, and a phase relationship between antenna 3 and antenna 4 in the retransmission may remain the same as that in the initial transmission. However, a phase relationship between group 1 and group 2 varies in each times of retransmission, but the phase relationship between the two groups has a fixed relationship between times of retransmission. For example, in first retransmission, the phase relationship between the two groups is $e^{j\alpha_1}$, all symbols are precoded by using a precoding matrix $\begin{bmatrix} 1 \\ 1 \\ 1 \times e^{j\alpha_1} \\ -j \times e^{j\alpha_1} \end{bmatrix}$; in second retransmission, the phase relationship between the two groups is $e^{j\alpha_2}$, all symbols are

precoded by using a precoding matrix $\begin{bmatrix} 1 \\ 1 \\ 1 \times e^{j\alpha_2} \\ -j \times e^{j\alpha_2} \end{bmatrix}$; in third retransmission, the phase relationship between the two

groups is $e^{j\alpha_3}$, all symbols are precoded by using a precoding matrix $\begin{bmatrix} 1 \\ 1 \\ 1 \times e^{j\alpha_2} \\ -j \times e^{j\alpha_2} \end{bmatrix}$; and if there are more than three times of retransmission, the rest may be deduced by analogy.

403: After coding, by using the precoding matrix, each symbol of the one channel-coded codeword to be retransmitted, send the coded symbol through an antenna.

It can be known from the forgoing that, in this embodiment, after receiving the retransmission indication, a same precoding matrix used by each symbol of the one channel-coded codeword to be retransmitted may be determined according to a same preset phase of each symbol, so as to determine a precoding matrix for the retransmission when no uplink grant signaling is received, thereby completing the retransmission when no uplink grant signaling is sent, and reducing an overhead for sending the uplink grant signaling. Moreover, because a phase relationship of each symbol is fixed, the determined precoding matrix is unique, so that a network side can correctly perform channel estimation.

A retransmission method provided in another embodiment of the present invention is described in the following. The embodiment describes a case of two-antenna transmission, where initial transmission is rank 2 transmission, and retransmission is rank 1 transmission. For two antennas, only one rank 2 precoding matrix is an identity matrix $\begin{bmatrix} 1 & 0 \\ 0 & 1 \end{bmatrix}$,

so a precoding matrix for the retransmission may be represented as $\begin{bmatrix} 1 \\ e^{j\alpha_k} \end{bmatrix}$. In an embodiment of the present invention, in first retransmission, all symbols of one channel to be retransmitted is precoded by using a precoding matrix $\begin{bmatrix} 1 \\ e^{j\alpha_1} \end{bmatrix}$;

in second retransmission, all symbols of one channel to be retransmitted is precoded by using a precoding matrix

$\begin{bmatrix} 1 \\ e^{j\alpha_2} \end{bmatrix}$; and in third retransmission, all symbols of one channel to be retransmitted is precoded by using a precoding

matrix $\begin{bmatrix} 1 \\ e^{j\alpha_3} \end{bmatrix}$.

A retransmission method provided in another embodiment of the present invention is described in the following. The embodiment describes a case of a four-antenna code book, where initial transmission is rank 3 transmission, and retransmission is rank 1 transmission. Because a rank 3 code book is not determined currently, in this embodiment, it is assumed that the rank 3 code book is a CMP code book. In this way, only one non-zero element exists in each row of the precoding matrix. It is assumed that a rank 3 precoding matrix is $\begin{bmatrix} 1 & 0 & 0 \\ 1 & 0 & 0 \\ 0 & 1 & 0 \\ 0 & 0 & 1 \end{bmatrix}$, so a rank 1 phase relationship is

$$\begin{bmatrix} 1 \\ 1 \\ 1 \times e^{j\alpha_k} \\ 1 \times e^{j\alpha_j} \end{bmatrix} \cdot$$

Therefore, in this embodiment, a rank 1 precoding matrix used in first retransmission may be

$$\begin{bmatrix} 1 \\ 1 \\ 1 \times e^{j\alpha_{11}} \\ 1 \times e^{j\alpha_{12}} \end{bmatrix};$$

a rank 1 precoding matrix used in second retransmission may be

$$\begin{bmatrix} 1 \\ 1 \\ 1 \times e^{j\alpha_{21}} \\ 1 \times e^{j\alpha_{22}} \end{bmatrix};$$

a rank 1 precoding matrix used in third

retransmission may be

$$\begin{bmatrix} 1 \\ 1 \\ 1 \times e^{j\alpha_{31}} \\ 1 \times e^{j\alpha_{32}} \end{bmatrix};$$

and if there are more than three times of retransmission, the rest may be deduced by analogy.

A retransmission method provided in another embodiment of the present invention is described in the following. The embodiment describes a case of a four-antenna code book, where initial transmission is rank 3 transmission, and

$$\begin{bmatrix} 1 & 0 & 0 \\ 1 & 0 & 0 \\ 0 & 1 & 0 \\ 0 & 0 & 1 \end{bmatrix},$$

retransmission is rank 2 transmission. In this embodiment, it is assumed that a rank 3 precoding matrix is

that is, a certain layer of a rank 3 code book is transmitted by using two antennas, and other two layers are transmitted by using single antennas. When the retransmission is the rank 2 transmission, power of each layer in the retransmission is the same, a precoding vector of one layer may be a vector obtained by normalizing a layer which is in the rank 3 code book and uses two antennas, and a precoding vector of the other layer is a vector obtained by merging layers which is in the rank 3 code book and uses the single antennas, so a rank 2 precoding matrix is

$$\begin{bmatrix} 1 & 0 \\ 1 & 0 \\ 0 & 1 \\ 0 & e^{j\alpha} \end{bmatrix} \cdot$$

Therefore, in this

embodiment, a precoding matrix used in first retransmission may be

$$\begin{bmatrix} 1 & 0 \\ 1 & 0 \\ 0 & 1 \\ 0 & e^{j\alpha_1} \end{bmatrix};$$

a precoding matrix used in second

retransmission may be

$$\begin{bmatrix} 1 & 0 \\ 1 & 0 \\ 0 & 1 \\ 0 & e^{j\alpha_2} \end{bmatrix};$$

a precoding matrix used in third retransmission may be

$$\begin{bmatrix} 1 & 0 \\ 1 & 0 \\ 0 & 1 \\ 0 & e^{j\alpha_3} \end{bmatrix};$$

and if there

are more than three times of retransmission, the rest may be deduced by analogy.

In another embodiment of the present invention, a mapping relationship may be established between a precoding matrix for retransmission and a precoding matrix for initial transmission. In the retransmission, a precoding matrix used in the retransmission may be determined according to the mapping relationship, thereby ensuring that the precoding matrix used in the retransmission is a preset precoding matrix. The preset precoding matrix may be specifically a precoding matrix specified in a protocol.

It is assumed that, the embodiment describes a case of four-antenna transmission, where the initial transmission is rank 2 transmission, and the retransmission is rank 1 transmission. In this case, two codewords are transmitted in initial transmission and each codeword occupies one layer, but one codeword is wrongly transmitted and needs to be retransmitted. In this case, a table may be made, so that each rank 2 precoding matrix corresponds to one rank 1 precoding matrix, and the rank 1 precoding matrix. For example, a kind of correspondence may be that all rank 2 precoding matrices correspond to preset rank 1 precoding matrices for retransmission. That is to say, when the initial transmission is rank n transmission and the retransmission is rank m transmission (m<n), no matter which precoding matrix is used in the initial rank n transmission, in the rank m retransmission, a certain preset rank m precoding matrix may be used for precoding, where the rank m precoding matrix comes from a rank m code book specified in a protocol.

A case where four antennas are used for retransmission is first described. It is assumed that a precoding matrix used in the initial transmission is $\begin{bmatrix} 1 & 0 \\ 1 & 0 \\ 0 & 1 \\ 0 & -j \end{bmatrix}$, as shown by an index 0 in FIG. 8. The precoding matrix indicates a phase relationship between antenna 1 and antenna 2 and a phase relationship between antenna 3 and antenna 4. In an embodiment of the present invention, it is assumed that a rank 2 precoding matrix selected in the initial transmission is $\begin{bmatrix} 1 & 0 \\ 1 & 0 \\ 0 & 1 \\ 0 & -j \end{bmatrix}$. A rank 1 precoding matrix (which may be one of precoding matrices shown in FIG. 5) most possibly selected in the initial transmission may be obtained through experimental sampling, and the rank 1 precoding matrix most possibly selected in the initial transmission is used as a precoding matrix used in the retransmission. In another embodiment of the present invention, a rank 1 precoding matrix with a minimum chordal distance from a matrix $\begin{bmatrix} 1 \\ 1 \\ 1 \\ -j \end{bmatrix}$ may be obtained through limited experiments and is used as a precoding matrix for the retransmission.

Then, a case where two antennas are used for retransmission is described. In an embodiment of the present invention, when two antennas are used for transmission, a selectable code book is shown in FIG. 5. In the code book shown in FIG. 5 (an item 1/2 of each code book in FIG. 5 represents a normalization operation, and when the code book is described in this embodiment, the normalization operation is omitted; for example, $\frac{1}{2}\begin{bmatrix} 1 \\ 1 \\ 1 \\ -1 \end{bmatrix}$ is described as $\begin{bmatrix} 1 \\ 1 \\ 1 \\ -1 \end{bmatrix}$), eight code books with index numbers 16 to 23 may be set as code books selected by the antennas when two antennas are used for sending in the retransmission. When the eight code books with the index numbers 16 to 23 are used for retransmission, $\begin{bmatrix} 1 \\ 0 \\ 1 \\ 0 \end{bmatrix}$ may be used as a precoding matrix for first retransmission, $\begin{bmatrix} 0 \\ 1 \\ 0 \\ -j \end{bmatrix}$ may be used as a precoding

$$\begin{bmatrix} 1 \\ 0 \\ -1 \\ 0 \end{bmatrix}$$

matrix for second retransmission, may be used as a precoding matrix for third retransmission; and if there are more than three times of retransmission, the rest may be deduced by analogy. That is to say, in the first retransmission, antennas 1 and 3 are used for sending, and in the second retransmission, antennas 2 and 4 are used for sending. Antennas 1 and 3 and antennas 2 and 4 are alternately used between contiguous times of retransmission, and precoding matrices in different retransmission are also different. Alternatively, in another embodiment of the present invention,

$$\begin{bmatrix} 1 \\ 0 \\ 1 \\ 0 \end{bmatrix}$$ may be used as a precoding matrix for the first retransmission, $$\begin{bmatrix} 1 \\ 0 \\ -1 \\ 0 \end{bmatrix}$$ may be used as a precoding matrix for the

second retransmission, $$\begin{bmatrix} 1 \\ 0 \\ j \\ 0 \end{bmatrix}$$ may be used as a precoding matrix for the third retransmission; and if there are more than three times of retransmission, the rest may be deduced by analogy. Alternatively, in another embodiment of the

present invention, $$\begin{bmatrix} 0 \\ 1 \\ 0 \\ -j \end{bmatrix}$$ may be used as a precoding matrix for the first retransmission, $$\begin{bmatrix} 0 \\ 1 \\ 0 \\ 1 \end{bmatrix}$$ may be used as a precoding matrix for the second retransmission, $$\begin{bmatrix} 0 \\ 1 \\ 0 \\ -1 \end{bmatrix}$$ may be used as a precoding matrix for the third retransmission; and if there are more than three times of retransmission, the rest may be deduced by analogy. That is to say, in each retransmission, only antennas 1 and 3 are used or only antennas 2 and 4 are used.

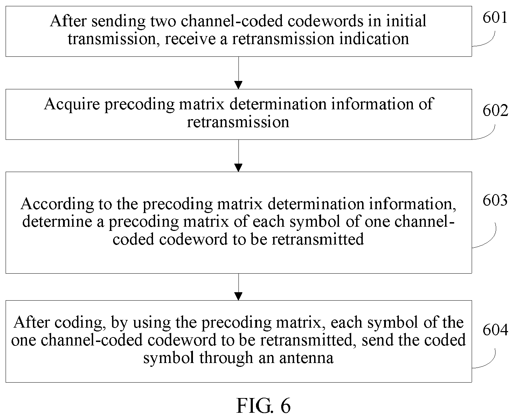

FIG. 6 describes a flow of a retransmission method provided in another embodiment of the present invention. The embodiment includes the following steps.

601: After sending two channel-coded codewords in initial transmission, receive a retransmission indication, where the retransmission indication includes an identifier of one channel-coded codeword to be retransmitted.

602: Acquire precoding matrix determining information of retransmission.

The precoding matrix determining information may be a redundant version (RV, Redundant Version) in the retransmission, a sub-frame number of the one channel-coded codeword to be retransmitted, the current number of times of transmission, and so on.

603: According to the precoding matrix determining information, determine a precoding matrix of each symbol of the one channel-coded codeword to be retransmitted.

Direct correspondence or functional correspondence between the precoding matrix determining information and an index number of a precoding matrix may be preset, so that after the precoding matrix determining information is determined, the index number of the precoding matrix may be determined, so as to determine the precoding matrix according to the index number of the precoding matrix.

604: After coding, by using the precoding matrix, each symbol of the one channel-coded codeword to be retransmitted, send the coded symbol through an antenna.

It can be known from the forgoing that, in this embodiment, after receiving the retransmission indication, a precoding matrix of each symbol of the one channel-coded codeword to be retransmitted may be determined according to the precoding matrix determining information, so as to determine a precoding matrix for the retransmission when no uplink grant signaling is received, thereby completing the retransmission when no uplink grant signaling is sent, and reducing an overhead for sending the uplink grant signaling. Moreover, because the precoding matrix determining information is a determined value, the determined precoding matrix is unique, so that a network side can correctly perform the channel estimation.

In another embodiment of the present invention, the precoding matrix determining information is the redundant version in the retransmission, and a set of code books for retransmission is given in advance, for example, six code books of two-antenna rank 1 transmission provided in an embodiment of the present invention, as shown in FIG. 7. Two of the six code books are code books selected by antennas and are mainly used for power saving. Therefore, code books obtained by removing the code books selected by the antennas may be defined as code books for the retransmission, that is, $\begin{bmatrix} 1 \\ 1 \end{bmatrix}$, $\begin{bmatrix} 1 \\ -1 \end{bmatrix}$, $\begin{bmatrix} 1 \\ j \end{bmatrix}$, and $\begin{bmatrix} 1 \\ -j \end{bmatrix}$. It may be set that, a precoding matrix $\begin{bmatrix} 1 \\ 1 \end{bmatrix}$ is used when an RV0 version is used for the retransmission, a precoding matrix $\begin{bmatrix} 1 \\ -1 \end{bmatrix}$ is used when an RV1 version is used for the retransmission, a precoding matrix $\begin{bmatrix} 1 \\ j \end{bmatrix}$ is used when an RV2 version is used for the retransmission, and a precoding matrix $\begin{bmatrix} 1 \\ -j \end{bmatrix}$ is used when an RV3 version is used for the retransmission.

In another embodiment of the present invention, the precoding matrix determining information is the sub-frame number of the one channel-coded codeword to be retransmitted, the current number of times of transmission, or a redundant version. In this case, the determining, according to the precoding matrix determining information, the precoding matrix of each symbol of the one channel-coded codeword to be retransmitted may include the following flow:

dividing the sub-frame number, the current number of times of transmission, or the redundant version by the preset total number of sets of code books for retransmission, using an obtained remainder as the index number of the precoding matrix, and determining the precoding matrix according to the index number;

adding a random variable to the sub-frame number, the current number of times of transmission, or the redundant version, and then multiplying an obtained sum by a preset coefficient, and then dividing an obtained product by the preset total number of sets of code books for retransmission, using an obtained remainder as the index number of the precoding matrix, and determining the precoding matrix according to the index number, where the random variable may be UE-specific, and may also be cell-specific, for example, a cell identifier number (Cell ID);

multiplying the sub-frame number, the current number of times of transmission, or the redundant version by a preset coefficient, and then dividing an obtained product by the preset total number of sets of code books for retransmission, using an obtained remainder as the index number of the precoding matrix, and determining the precoding matrix according to the index number.

In another embodiment of the present invention, the precoding matrix determining information is the current number of times of transmission (that is, the number of times of retransmission), and the determining, according to the precoding matrix determining information, the precoding matrix of each symbol of the one channel-coded codeword to be retransmitted includes: determining a rank of a precoding matrix to be used in the retransmission, and determining a set of code books for the retransmission, where the set of code books for the retransmission is a subset of a set of code books for the initial transmission during transmission of the rank. In another embodiment of the present invention, the set of code books for the retransmission is a proper subset of the set of code books for the initial transmission during the transmission of the rank. Code books included in the proper subset correspond to code books selected from the set of code books for the initial transmission of the current retransmission. A phase relationship among antennas included in at least one antenna group corresponding to the code books included in the proper subset keeps consistent with a phase relationship among the antennas in the initial transmission. Code books which are for the initial transmission and selected in the current retransmission are different. A union set of all corresponding sets of code books for retransmission is the same as the set of code books for the initial transmission during the transmission of the rank. The set of code books for the retransmission is searched for the precoding matrix by using the current number of times of transmission as an index, and the found precoding matrix is used as the precoding matrix of each symbol of the one channel-coded codeword to be retransmitted.

For example, when two sending antennas exist, the initial transmission is rank 2 transmission, and the retransmission is rank 1 transmission, different rank 1 precoding matrices may be used as the precoding matrix for the retransmission according to different current numbers of times of transmission. Specifically, the precoding matrix for the retransmission may be selected from a set of rank 1 code books by using the current number of times of transmission as an index. For example, the precoding matrix for the retransmission may be selected from a set of code books shown in FIG. 7.

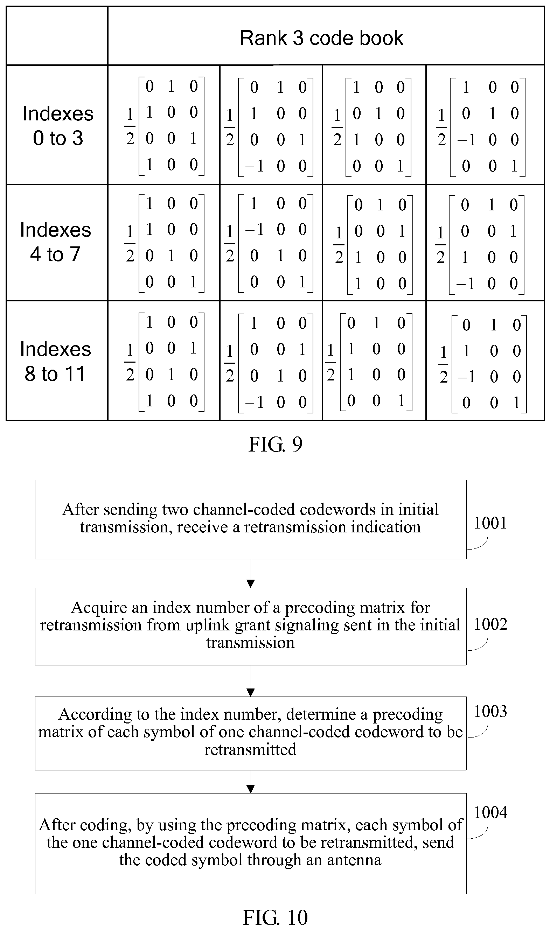

When four sending antennas exist, the initial transmission is rank 2, rank 3, or rank 4 transmission, and the retransmission is rank 1 transmission, a rank 1 precoding matrix may be selected from a set of rank 1 code books according to different numbers of times of retransmission. When the initial transmission is rank 3 or rank 4 transmission and the retransmission is rank 2 transmission, a rank 2 precoding matrix may be selected from a set of rank 2 code books according to different numbers of times of retransmission. A set of rank 2 code books provided in an embodiment of the present invention is shown in FIG. 8. When the initial transmission is rank 4 transmission and the retransmission is rank 3 transmission, a rank 3 precoding matrix may be selected from a set of rank 3 code books according to different numbers of times of retransmission. A set of rank 3 code books provided in an embodiment of the present invention is shown in FIG. 9.

To sum up, during uplink multi-antenna transmission, two codewords are transmitted in initial transmission, and one codeword is wrongly transmitted, in retransmission, the codeword wrongly transmitted in the initial transmission may be transmitted only. When no control signaling indication exists in the retransmission, because only one codeword needs to be retransmitted, a rank of the retransmission is less than a rank of the initial transmission, and the rank of the retransmission may be equal to a rank or the number of layers occupied by a rank of the wrong codeword in the initial transmission. The precoding matrix for the retransmission may be a preset precoding matrix. When the initial transmission is rank n transmission and the retransmission is rank m transmission (m<n), a precoding matrix used in the rank m retransmission may be a rank m code book specified in a protocol. Certain correspondence may be established between the precoding matrix for the rank m retransmission and a precoding matrix for the rank n initial transmission. For example, a kind of correspondence may be as follows: No matter which precoding matrix is used in the initial rank n transmission, in the rank m retransmission, a certain preset rank m precoding matrix may be used for precoding, where the rank m precoding matrix may be a rank m code book specified in a protocol.

FIG. 10 describes a flow of a retransmission method provided in another embodiment of the present invention. This embodiment includes:

1001: After sending two channel-coded codewords in initial transmission, receive a retransmission indication, where the retransmission indication includes an identifier of one channel-coded codeword to be retransmitted.
1002: Acquire an index number of a precoding matrix for retransmission from uplink grant signaling sent in the initial transmission.

For example, the index number of the precoding matrix for the retransmission may be indicated by a redundant bit, a redundant state, or an added bit in ul grant signaling of the initial transmission. Specifically, the index number of the precoding matrix for the retransmission may be indicated by using a PADDING bit in a downlink control information (DCI, downlink control information) format 0 or by adding a bit in a new DCI format.

1003: According to the index number, determine a precoding matrix of each symbol of the one channel-coded codeword to be retransmitted.

1004: After coding, by using the precoding matrix, each symbol of the one channel-coded codeword to be retransmitted, send the coded symbol through an antenna.

It can be known from the forgoing that, in this embodiment, after receiving the retransmission indication, the index number of the precoding matrix for retransmission may be acquired from the uplink grant signaling sent in the initial transmission, so as to determine the precoding matrix of each symbol of the one channel-coded codeword to be retransmitted according to the index number, and determine the precoding matrix for the retransmission when no uplink grant signaling is received in the retransmission, thereby completing the retransmission when no uplink grant signaling is sent, and reducing an overhead for sending the uplink grant signaling. Moreover, because the uplink grant signaling sent in the initial transmission carries an index of the precoding matrix, the determined precoding matrix is unique, so that a network side can correctly perform the channel estimation.

It should be noted that: for the ease of description, the preceding method embodiments are expressed as a series of action combinations. However, persons skilled in the art should know that, the present invention is not limited to the described action sequences because according to the present invention, certain steps may adopt other sequences or be implemented simultaneously. Persons skilled in the art should further understand that the described embodiments are all exemplary embodiments, and the involved actions and modules are not necessarily required by the present invention.

A retransmission apparatus provided in an embodiment of the present invention is described in the following. The retransmission apparatus provided in an embodiment of the present invention may be a user equipment.

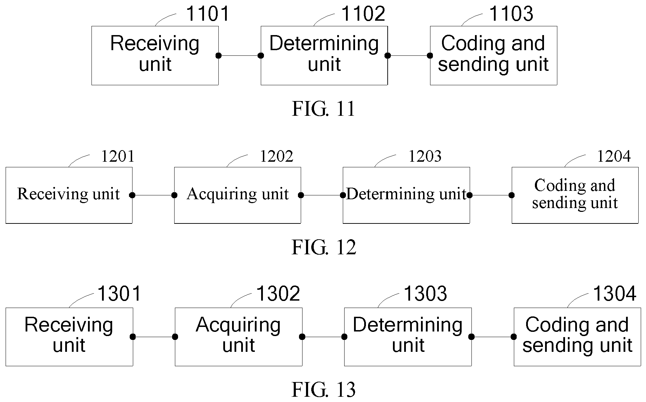

FIG. 11 describes a structure of a retransmission apparatus provided in another embodiment of the present invention, where the retransmission apparatus includes:

a receiving unit 1101, configured to, after two channel-coded codewords are sent in initial transmission, receive a retransmission indication, where the retransmission indication includes an identifier of one channel-coded codeword to be retransmitted;

a determining unit 1102, configured to, after the receiving unit 1101 receives the retransmission indication, determine, according to a preset phase of each symbol, a precoding matrix of each symbol of the one channel-coded codeword to be retransmitted, where a phase relationship of each symbol is fixed; and

a coding and sending unit 1103, configured to, after coding by using the precoding matrix determined by the determining unit 1102, each symbol of the one channel-coded codeword to be retransmitted, send the coded symbol through an antenna.

It can be known from the forgoing that, in this embodiment, after receiving the retransmission indication, the precoding matrix of each symbol of the one channel-coded codeword to be retransmitted may be determined according to the preset phase of each symbol, so as to determine a precoding matrix for the retransmission when no uplink grant signaling is received, thereby completing the retransmission when no uplink grant signaling is sent, and reducing an overhead for sending the uplink grant signaling. Moreover, because the phase relationship of each symbol is fixed, the determined precoding matrix is unique, so that a network side can correctly perform channel estimation.

FIG. 12 describes a structure of a retransmission apparatus provided in another embodiment of the present invention, where the retransmission apparatus includes:

a receiving unit 1201, configured to, after two channel-coded codewords are sent in initial transmission, receive a retransmission indication, where the retransmission indication includes an identifier of one channel-coded codeword to be retransmitted;

an acquiring unit 1202, configured to, after the receiving unit 1201 receives the retransmission indication, acquire an index number of a precoding matrix for retransmission from uplink grant signaling sent in the initial transmission;

a determining unit 1203, configured to determine, according to the index number acquired by the acquiring unit 1202, a precoding matrix of each symbol of the one channel-coded codeword to be retransmitted; and

a coding and sending unit 1204, configured to, after coding, by using the precoding matrix determined by the determining unit 1203, each symbol of the one channel-coded codeword to be retransmitted, send the coded symbol through an antenna.

It can be known from the forgoing that, in this embodiment, after receiving the retransmission indication, the index number of the precoding matrix for retransmission may be acquired from the uplink grant signaling sent in the initial transmission, so as to determine the precoding matrix of each symbol of the one channel-coded codeword to be retransmitted according to the index number, and determine the precoding matrix for the retransmission when no uplink grant signaling is received in the retransmission, thereby completing the retransmission when no uplink grant signaling is sent, and reducing an overhead for sending the uplink grant signaling. Moreover, because the uplink grant signaling sent in the initial transmission carries the index of the precoding matrix, the determined precoding matrix is unique, so that a network side can correctly perform channel estimation.

FIG. 13 describes a structure of a retransmission apparatus provided in another embodiment of the present invention, where the retransmission apparatus includes:

a receiving unit 1301, configured to, after two channel-coded codewords are sent in initial transmission, receive a retransmission indication, where the retransmission indication includes an identifier of one channel-coded codeword to be retransmitted;

an acquiring unit 1302, configured to, after the receiving unit 1301 receives the retransmission indication, acquire precoding matrix determining information of retransmission;

a determining unit 1303, configured to determine, according to the precoding matrix determining information acquired by the acquiring unit 1302, a precoding matrix of each symbol of the one channel-coded codeword to be retransmitted; and

a coding and sending unit 1304, configured to, after coding, by using the precoding matrix determined by the determining unit 1303, each symbol of the one channel-coded codeword to be retransmitted, send the coded symbol through an antenna.

It can be known from the forgoing that, in this embodiment, after receiving the retransmission indication, the precoding matrix of each symbol of the one channel-coded codeword to be retransmitted may be determined according to the precoding matrix determining information, so as to determine a precoding matrix for the retransmission when no uplink grant signaling is received, thereby completing the retransmission when no uplink grant signaling is sent, and reducing an overhead for sending the uplink grant signaling. Moreover, because the precoding matrix determining information is a determined value, the determined precoding matrix is unique, so that a network side can correctly perform channel estimation.

Another embodiment of the present invention further provides a communication system. The communication system includes a retransmission apparatus provided in the embodiments of the present invention.

Content such as information exchange and an execution process between modules in the foregoing apparatus and system is based on a concept the same as the method embodiments of the present invention. For the specific content, reference may be made to the descriptions in the method embodiments of the present invention. The content is not described herein again.

Persons of ordinary skill in the art may understand that all or part of the flows in the methods in the foregoing embodiments may be completed by a program instructing relevant hardware. The program may be stored in a computer readable storage medium. When the program is executed, the flows of the foregoing method embodiments may be performed. The storage medium may be a magnetic disk, an optical disk, a read-only memory (ROM: Read-Only Memory), or a random access memory (RAM: Random Access Memory), and so on.

The scope of the invention is defined by the independent claims. Preferred embodiments are defined by the dependent claims.

## Claims

1. A retransmission method at a user equipment, comprising:

   after transmitting two channel-coded codewords in initial transmission, receiving (601) a retransmission indication, where the retransmission indication comprises an identifier of one channel-coded codeword to be retransmitted;
   further comprising:

   acquiring (602) precoding matrix determining information of the retransmission given by an index number of the precoding matrix for the retransmission indicated by a redundant bit or an added bit in UL grant signaling of the initial transmission;
   according to the precoding matrix determining information, determining (603) a precoding matrix of each symbol of the one channel-coded codeword to be retransmitted, where the precoding matrix is a precoding matrix for the retransmission, the precoding matrix for the retransmission is determined according to a mapping relationship, and the mapping relationship is established between the precoding matrix for the retransmission and a precoding matrix for the initial transmission; and
   after coding (604), by using the precoding matrix for the retransmission, the each symbol of the one channel-coded codeword to be retransmitted, sending the coded symbol through an antenna;
   wherein a rank of the precoding matrix for the retransmission and a rank of the precoding matrix for the initial transmission are different;
   wherein after the transmitting the two channel-coded codewords in the initial transmission and before the transmitting one channel-coded codeword in the retransmission there is no uplink grant, UL grant, signaling.

2. The method according to claim 1, wherein
   in a case of four-antenna transmission, a rank of the precoding matrix for the initial transmission is rank 2 and a rank of the precoding matrix for the retransmission is rank 1, each codeword in the two channel-coded codewords in the initial transmission occupies one layer, one codeword of the two channel-coded codeword is wrongly transmitted in the initial transmission, and the wrongly transmitted codeword need to be retransmitted.

3. The method according to 1 or 2, wherein
   each rank 2 precoding matrix has one corresponding rank 1 precoding matrix.

4. A retransmission apparatus, comprising:

   a receiving unit (1201), configured to after transmitting two channel-coded codewords in initial transmission, receive a retransmission indication, where the retransmission indication includes an identifier of one channel-coded codeword to be retransmitted;
further comprising:

an acquiring unit (1202), configured to acquire precoding matrix determining information of the retransmission, given by an index number of the precoding matrix for the retransmission indicated by a redundant bit or an added bit in UL grant signaling of the initial transmission, after the receiving unit (1201) receives the retransmission indication;
a determining unit (1203), configured to according to the precoding matrix determining information acquired by the acquiring unit (1202), determine a precoding matrix of each symbol of the one channel-coded codeword to be retransmitted, where the precoding matrix is a precoding matrix for the retransmission, the precoding matrix for the retransmission is determined according to a mapping relationship, and the mapping relationship is established between the precoding matrix for the retransmission and a precoding matrix for the initial transmission; and
a coding and sending unit (1204), configured to code, by using the precoding matrix for the retransmission determined by the determining unit (1203), the each symbol of the one channel-coded codeword to be retransmitted, and send the coded symbol through an antenna;
wherein a rank of the precoding matrix for the retransmission determined by the determining unit (1203) and a rank of the precoding matrix for the initial transmission are different;
wherein after transmitting two channel-coded codewords in initial transmission, and transmitting one channel-coded codeword in retransmission, the retransmission apparatus is further configured such that there is no uplink grant, UL grant, signaling.

5. The apparatus according to 4, wherein
in a case of four-antenna transmission, a rank of the precoding matrix for the initial transmission is rank 2, a rank of the precoding matrix for the retransmission determined by the determining unit (1203) is rank 1, each codeword in the two channel-coded codewords transmitted by the unit configured to transmit the two channel-coded codewords in the initial transmission occupies one layer, one codeword of the two channel-coded codeword is wrongly transmitted, and the wrongly transmitted codeword need to be retransmitted.

6. The apparatus according to 4 or 5, wherein
each rank 2 precoding matrix has one corresponding rank 1 precoding matrix.

**Patentansprüche**

1. Übertragungswiederholungsverfahren an einer Benutzervorrichtung, umfassend:

nach einem Übertragen von zwei kanalcodierten Codewörtern bei der Erstübertragung, Empfangen (601) einer Übertragungswiederholungsanzeige, wobei die Übertragungswiederholungsanzeige einen Identifikator für ein kanalcodiertes Codewort umfasst, das erneut zu übertragen ist;
ferner umfassend:

Erlangen (602) einer Vorcodiermatrix, die Informationen über die Übertragungswiederholung bestimmt, die durch eine Indexnummer der Vorcodiermatrix für die Übertragungswiederholung gegeben sind, die durch ein redundantes Bit oder ein hinzugefügtes Bit bei einer UL-Zuteilungssignalisierung der Erstübertragung angezeigt wird;
gemäß der Vorcodiermatrix, die Informationen bestimmt, Bestimmen (603) einer Vorcodiermatrix jedes Symbols des einen kanalcodierten Codeworts, das erneut zu übertragen ist, wobei die Vorcodiermatrix eine Vorcodiermatrix für die Übertragungswiederholung ist, die Vorcodiermatrix für die Übertragungswiederholung gemäß einer Abbildungsbeziehung bestimmt wird und die Abbildungsbeziehung zwischen der Vorcodiermatrix für die Übertragungswiederholung und einer Vorcodiermatrix für die Erstübertragung hergestellt wird; und
nach einem Codieren (604) jedes Symbols des einen kanalcodierten Codeworts, das erneut zu übertragen ist, unter Verwendung der Vorcodiermatrix für die Übertragungswiederholung, Senden des codierten Symbols über eine Antenne;
wobei ein Rang der Vorcodiermatrix für die Übertragungswiederholung und ein Rang der Vorcodiermatrix für die Erstübertragung unterschiedlich sind;

wobei nach dem Übertragen der beiden kanalcodierten Codewörter in der Erstübertragung und vor dem Übertragen eines kanalcodierten Codeworts in der Übertragungswiederholung keine Uplink-Zuteilung, UL-Zuteilung, Signalisierung erfolgt.

2. Verfahren nach Anspruch 1, wobei
im Falle einer Vierantennenübertragung ein Rang der Vorcodiermatrix für die Erstübertragung Rang 2 und ein Rang der Vorcodiermatrix für die Übertragungswiederholung Rang 1 ist, jedes Codewort in den beiden kanalcodierten Codewörtern in der Erstübertragung eine Schicht belegt, ein Codewort der zwei kanalcodierten Codewörter in der Erstübertragung falsch übertragen ist und das falsch übertragene Codewort erneut übertragen werden muss.

3. Verfahren nach Anspruch 1 oder 2, wobei
jede Vorcodiermatrix mit dem Rang 2 eine entsprechende Vorcodiermatrix des Rangs 1 aufweist.

4. Übertragungswiederholungsvorrichtung, umfassend:

eine Empfangseinheit (1201), die konfiguriert ist, um nach dem Übertragen von zwei kanalcodierten Codewörtern bei der Erstübertragung eine Übertragungswiederholungsanzeige zu empfangen, wobei die Übertragungswiederholungsanzeige einen Identifikator für ein kanalcodiertes Codewort beinhaltet, das erneut zu übertragen ist; ferner umfassend:

eine Erlangungseinheit (1202), die konfiguriert ist, um eine Vorcodiermatrix zu erlangen, die Informationen der Übertragungswiederholung bestimmt, die durch eine Indexnummer der Vorcodiermatrix für die Übertragungswiederholung gegeben sind, die durch ein redundantes Bit oder ein hinzugefügtes Bit in der UL-Zuteilungssignalisierung der Erstübertragung angezeigt wird, nachdem die Empfangseinheit (1201) die Übertragungswiederholungsanzeige empfangen hat;
eine Bestimmungseinheit (1203), die konfiguriert ist, um gemäß der Vorcodiermatrix, die Informationen bestimmt, die von der Erlangungseinheit (1202) erlangt wurden, eine Vorcodiermatrix jedes Symbols des einen kanalcodierten Codeworts zu bestimmen, das erneut zu übertragen ist, wobei die Vorcodiermatrix eine Vorcodiermatrix für die Übertragungswiederholung ist, die Vorcodiermatrix für die Übertragungswiederholung gemäß einer Abbildungsbeziehung bestimmt wird, und die Abbildungsbeziehung zwischen der Vorcodiermatrix für die Übertragungswiederholung und einer Vorcodiermatrix für die Erstübertragung hergestellt wird; und
eine Codier- und Sendeeinheit (1204), die konfiguriert ist, um unter Verwendung der Vorcodiermatrix für die von der Bestimmungseinheit (1203) bestimmte Übertragungswiederholung das jeweilige Symbol des einen kanalcodierten Codeworts zu codieren, das erneut zu übertragen ist, und das codierte Symbol über eine Antenne zu senden;
wobei ein Rang der Vorcodiermatrix für die Übertragungswiederholung, der durch die Bestimmungseinheit (1203) bestimmt wird, und ein Rang der Vorcodiermatrix für die Erstübertragung unterschiedlich sind;
wobei nach dem Übertragen von zwei kanalcodierten Codewörtern bei der Erstübertragung und dem Übertragen eines kanalcodierten Codeworts bei der Übertragungswiederholung die Übertragungswiederholungsvorrichtung ferner so konfiguriert ist, dass es keine Uplink-Zuteilung, UL-Zuteilung und Signalisierung gibt.

5. Vorrichtung nach 4, wobei
im Falle einer Vierantennenübertragung ein Rang der Vorcodiermatrix für die Erstübertragung Rang 2 ist, ein Rang der Vorcodiermatrix für die von der Bestimmungseinheit (1203) bestimmte Übertragungswiederholung Rang 1 ist, jedes Codewort in den beiden kanalcodierten Codewörtern, die von der Einheit übertragen werden, die konfiguriert ist, um die beiden kanalcodierten Codewörter in der Erstübertragung zu übertragen, eine Schicht belegt, ein Codewort der zwei kanalcodierten Codewörter falsch übertragen ist und das falsch übertragene Codewort erneut übertragen werden muss.

6. Vorrichtung nach 4 oder 5, wobei jede Vorcodiermatrix mit dem Rang 2 eine entsprechende Vorcodiermatrix mit dem Rang 1 hat.

**Revendications**

1. Procédé de retransmission au niveau d'un équipement d'utilisateur, le procédé consistant à :

après la transmission de deux mots de code codés par canal dans une transmission initiale, recevoir (601) une indication de retransmission, l'indication de retransmission comprenant un identifiant d'un mot de code codé par canal à retransmettre ;

le procédé consistant en outre à :

acquérir (602) une information de détermination de matrice de précodage de la retransmission donnée par un numéro d'index de la matrice de précodage pour la retransmission indiquée par un bit redondant ou un bit ajouté dans une signalisation d'octroi UL de la transmission initiale ;

selon l'information de détermination de matrice de précodage, déterminer (603) une matrice de précodage de chaque symbole dudit mot de code codé par canal à retransmettre, la matrice de précodage étant une matrice de précodage pour la retransmission, la matrice de précodage pour la retransmission étant déterminée selon une relation de correspondance, et la relation de correspondance étant établie entre la matrice de précodage pour la retransmission et une matrice de précodage pour la transmission initiale ; et

après codage (604), au moyen de la matrice de précodage pour la retransmission, de chaque symbole dudit mot de code codé par canal à retransmettre, envoyer le symbole codé par l'intermédiaire d'une antenne ;

un rang de la matrice de précodage pour la retransmission et un rang de la matrice de précodage pour la transmission initiale étant différents ;

aucune signalisation d'octroi en liaison montante (UL) n'existant après la transmission des deux mots de code codés par canal dans la transmission initiale et avant la transmission d'un mot de code codé par canal dans la retransmission.

2. Procédé selon la revendication 1, dans lequel :
dans le cas d'une transmission par quatre antennes, un rang de la matrice de précodage pour la transmission initiale est un rang 2 et un rang de la matrice de précodage pour la retransmission est un rang 1, chaque mot de code dans les deux mots de code codés par canal dans la transmission initiale occupant une couche, un mot de code des deux mots de code codés par canal étant mal transmis dans la transmission initiale, et le mot de code mal transmis devant être retransmis.

3. Procédé selon la revendication 1 ou 2, dans lequel :
chaque matrice de précodage de rang 2 a une matrice de précodage de rang 1 correspondante.

4. Appareil de retransmission, comprenant :

une unité de réception (1201), configurée pour, après la transmission de deux mots de code codés par canal dans une transmission initiale, recevoir une indication de retransmission, l'indication de retransmission comprenant un identifiant d'un mot de code codé par canal à retransmettre ;

l'appareil de retransmission comprenant en outre :

une unité d'acquisition (1202), configurée pour acquérir une information de détermination de matrice de précodage de la retransmission donnée par un numéro d'index de la matrice de précodage pour la retransmission indiquée par un bit redondant ou un bit ajouté dans une signalisation d'octroi UL de la transmission initiale, après la réception de l'indication de retransmission par l'unité de réception (1201) ;

une unité de détermination (1203), configurée pour, selon l'information de détermination de matrice de précodage acquise par l'unité d'acquisition (1202), déterminer une matrice de précodage de chaque symbole dudit mot de code codé par canal à retransmettre, la matrice de précodage étant une matrice de précodage pour la retransmission, la matrice de précodage pour la retransmission étant déterminée selon une relation de correspondance, et la relation de correspondance étant établie entre la matrice de précodage pour la retransmission et une matrice de précodage pour la transmission initiale ; et

une unité de codage et d'envoi (1204), configurée pour coder, au moyen de la matrice de précodage pour la retransmission déterminée par l'unité de détermination (1203), chaque symbole dudit mot de code codé par canal à retransmettre, et envoyer le symbole codé par l'intermédiaire d'une antenne ;

un rang de la matrice de précodage pour la retransmission déterminée par l'unité de détermination (1203) et un rang de la matrice de précodage pour la transmission initiale étant différents ;

l'appareil de retransmission étant en outre configuré de sorte qu'aucune signalisation d'octroi en liaison montante (UL) n'existe après une transmission de deux mots de code codés par canal dans une transmission initiale et après une transmission d'un mot de code codé par canal dans une retransmission.

**5.** Appareil selon la revendication 4, dans lequel :
dans le cas d'une transmission par quatre antennes, un rang de la matrice de précodage pour la transmission initiale est un rang 2 et un rang de la matrice de précodage pour la retransmission déterminée par l'unité de détermination (1203) est un rang 1, chaque mot de code dans les deux mots de code codés par canal transmis par l'unité configurée pour transmettre les deux mots de code codés par canal dans la transmission initiale occupant une couche, un mot de code des deux mots de code codés par canal étant mal transmis, et le mot de code mal transmis devant être retransmis.

**6.** Appareil selon la revendication 4 ou 5, dans lequel :
chaque matrice de précodage de rang 2 a une matrice de précodage de rang 1 correspondante.

After sending two channel-coded codewords in initial transmission, receive a retransmission indication  101

According to a preset phase of each symbol, determine a precoding matrix of each symbol of one channel-coded codeword to be retransmitted  102

After coding, by using the precoding matrix, each symbol of the one channel-coded codeword to be retransmitted, send the coded symbol through an antenna  103

FIG. 1

FIG. 2

EP 2 555 457 B1

$$\begin{bmatrix} 1 \times e^{j\alpha_{11}} \\ 1 \times e^{j\alpha_{12}} \\ 1 \\ -1 \end{bmatrix} \quad \text{Slot 2n+1}$$

$$\begin{bmatrix} 1 \times e^{j\alpha_{21}} \\ 1 \times e^{j\alpha_{22}} \\ 1 \\ -1 \end{bmatrix} \quad \text{Slot 2n+1}$$

Pilot
symbol

Pilot
symbol

| Symbol 1 | Symbol 2 | Symbol 3 | | Symbol 4 | Symbol 5 | Symbol 6 | Symbol 7 | Symbol 8 | Symbol 9 | | Symbol 10 | Symbol 11 | Symbol 12 |
|---|---|---|---|---|---|---|---|---|---|---|---|---|---|

One sub-frame

FIG. 3

After sending two channel-coded codewords in initial transmission, receive a retransmission indication — 401

According to the number of times of retransmission, determine a precoding matrix of each symbol of one channel-coded codeword to be retransmitted — 402

After coding, by using the precoding matrix, each symbol of the one channel-coded codeword to be retransmitted, send the coded symbol through an antenna — 403

FIG. 4

| | | | | | | | | |
|---|---|---|---|---|---|---|---|---|
| Index 0 to 7 | $\frac{1}{2}\begin{bmatrix}1\\1\\1\\-1\end{bmatrix}$ | $\frac{1}{2}\begin{bmatrix}1\\1\\j\\j\end{bmatrix}$ | $\frac{1}{2}\begin{bmatrix}1\\1\\-1\\1\end{bmatrix}$ | $\frac{1}{2}\begin{bmatrix}1\\1\\-j\\-j\end{bmatrix}$ | $\frac{1}{2}\begin{bmatrix}1\\j\\1\\j\end{bmatrix}$ | $\frac{1}{2}\begin{bmatrix}1\\j\\j\\1\end{bmatrix}$ | $\frac{1}{2}\begin{bmatrix}1\\j\\-1\\-j\end{bmatrix}$ | $\frac{1}{2}\begin{bmatrix}1\\j\\-j\\-1\end{bmatrix}$ |
| Index 8 to 15 | $\frac{1}{2}\begin{bmatrix}1\\-1\\1\\1\end{bmatrix}$ | $\frac{1}{2}\begin{bmatrix}1\\-1\\j\\-j\end{bmatrix}$ | $\frac{1}{2}\begin{bmatrix}1\\-1\\-1\\-1\end{bmatrix}$ | $\frac{1}{2}\begin{bmatrix}1\\-1\\-j\\j\end{bmatrix}$ | $\frac{1}{2}\begin{bmatrix}1\\-j\\1\\-j\end{bmatrix}$ | $\frac{1}{2}\begin{bmatrix}1\\-j\\j\\-1\end{bmatrix}$ | $\frac{1}{2}\begin{bmatrix}1\\-j\\-1\\j\end{bmatrix}$ | $\frac{1}{2}\begin{bmatrix}1\\-j\\-j\\1\end{bmatrix}$ |
| Index 16 to 23 | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ |

FIG. 5

After sending two channel-coded codewords in initial transmission, receive a retransmission indication | 601

Acquire precoding matrix determination information of retransmission | 602

According to the precoding matrix determination information, determine a precoding matrix of each symbol of one channel-coded codeword to be retransmitted | 603

After coding, by using the precoding matrix, each symbol of the one channel-coded codeword to be retransmitted, send the coded symbol through an antenna | 604

FIG. 6

| Index of a code book | The number of layers | |
|---|---|---|
| | 1 | 2 |
| 0 | $\dfrac{1}{\sqrt{2}}\begin{bmatrix}1\\1\end{bmatrix}$ | $\dfrac{1}{\sqrt{2}}\begin{bmatrix}1 & 0\\0 & 1\end{bmatrix}$ |
| 1 | $\dfrac{1}{\sqrt{2}}\begin{bmatrix}1\\-1\end{bmatrix}$ | |
| 2 | $\dfrac{1}{\sqrt{2}}\begin{bmatrix}1\\j\end{bmatrix}$ | |
| 3 | $\dfrac{1}{\sqrt{2}}\begin{bmatrix}1\\-j\end{bmatrix}$ | |
| 4 | $\dfrac{1}{\sqrt{2}}\begin{bmatrix}1\\0\end{bmatrix}$ | |
| 5 | $\dfrac{1}{\sqrt{2}}\begin{bmatrix}0\\1\end{bmatrix}$ | |

FIG. 7

| | Rank 2 code book | | | | | |
|---|---|---|---|---|---|---|
| Indexes 0 to 5 | $\dfrac{1}{2}\begin{bmatrix}1&0\\1&0\\0&1\\0&-j\end{bmatrix}$ | $\dfrac{1}{2}\begin{bmatrix}1&0\\1&0\\0&1\\0&j\end{bmatrix}$ | $\dfrac{1}{2}\begin{bmatrix}1&0\\-j&0\\0&1\\0&1\end{bmatrix}$ | $\dfrac{1}{2}\begin{bmatrix}1&0\\-j&0\\0&1\\0&-1\end{bmatrix}$ | $\dfrac{1}{2}\begin{bmatrix}1&0\\-1&0\\0&1\\0&-j\end{bmatrix}$ | $\dfrac{1}{2}\begin{bmatrix}1&0\\-1&0\\0&1\\0&j\end{bmatrix}$ |
| Indexes 6 to 11 | $\dfrac{1}{2}\begin{bmatrix}1&0\\j&0\\0&1\\0&1\end{bmatrix}$ | $\dfrac{1}{2}\begin{bmatrix}1&0\\j&0\\0&1\\0&-1\end{bmatrix}$ | $\dfrac{1}{2}\begin{bmatrix}1&0\\0&1\\1&0\\0&1\end{bmatrix}$ | $\dfrac{1}{2}\begin{bmatrix}1&0\\0&1\\1&0\\0&-1\end{bmatrix}$ | $\dfrac{1}{2}\begin{bmatrix}1&0\\0&1\\-1&0\\0&1\end{bmatrix}$ | $\dfrac{1}{2}\begin{bmatrix}1&0\\0&1\\-1&0\\0&-1\end{bmatrix}$ |
| Indexes 12 to 15 | $\dfrac{1}{2}\begin{bmatrix}1&0\\0&1\\0&1\\1&0\end{bmatrix}$ | $\dfrac{1}{2}\begin{bmatrix}1&0\\0&1\\0&-1\\1&0\end{bmatrix}$ | $\dfrac{1}{2}\begin{bmatrix}1&0\\0&1\\0&1\\-1&0\end{bmatrix}$ | $\dfrac{1}{2}\begin{bmatrix}1&0\\0&1\\0&-1\\-1&0\end{bmatrix}$ | | |

FIG. 8

| | Rank 3 code book | | | |
|---|---|---|---|---|
| Indexes 0 to 3 | $\frac{1}{2}\begin{bmatrix} 0 & 1 & 0 \\ 1 & 0 & 0 \\ 0 & 0 & 1 \\ 1 & 0 & 0 \end{bmatrix}$ | $\frac{1}{2}\begin{bmatrix} 0 & 1 & 0 \\ 1 & 0 & 0 \\ 0 & 0 & 1 \\ -1 & 0 & 0 \end{bmatrix}$ | $\frac{1}{2}\begin{bmatrix} 1 & 0 & 0 \\ 0 & 1 & 0 \\ 1 & 0 & 0 \\ 0 & 0 & 1 \end{bmatrix}$ | $\frac{1}{2}\begin{bmatrix} 1 & 0 & 0 \\ 0 & 1 & 0 \\ -1 & 0 & 0 \\ 0 & 0 & 1 \end{bmatrix}$ |
| Indexes 4 to 7 | $\frac{1}{2}\begin{bmatrix} 1 & 0 & 0 \\ 1 & 0 & 0 \\ 0 & 1 & 0 \\ 0 & 0 & 1 \end{bmatrix}$ | $\frac{1}{2}\begin{bmatrix} 1 & 0 & 0 \\ -1 & 0 & 0 \\ 0 & 1 & 0 \\ 0 & 0 & 1 \end{bmatrix}$ | $\frac{1}{2}\begin{bmatrix} 0 & 1 & 0 \\ 0 & 0 & 1 \\ 1 & 0 & 0 \\ 1 & 0 & 0 \end{bmatrix}$ | $\frac{1}{2}\begin{bmatrix} 0 & 1 & 0 \\ 0 & 0 & 1 \\ 1 & 0 & 0 \\ -1 & 0 & 0 \end{bmatrix}$ |
| Indexes 8 to 11 | $\frac{1}{2}\begin{bmatrix} 1 & 0 & 0 \\ 0 & 0 & 1 \\ 0 & 1 & 0 \\ 1 & 0 & 0 \end{bmatrix}$ | $\frac{1}{2}\begin{bmatrix} 1 & 0 & 0 \\ 0 & 0 & 1 \\ 0 & 1 & 0 \\ -1 & 0 & 0 \end{bmatrix}$ | $\frac{1}{2}\begin{bmatrix} 0 & 1 & 0 \\ 1 & 0 & 0 \\ 1 & 0 & 0 \\ 0 & 0 & 1 \end{bmatrix}$ | $\frac{1}{2}\begin{bmatrix} 0 & 1 & 0 \\ 1 & 0 & 0 \\ -1 & 0 & 0 \\ 0 & 0 & 1 \end{bmatrix}$ |

FIG. 9

After sending two channel-coded codewords in initial transmission, receive a retransmission indication — 1001

Acquire an index number of a precoding matrix for retransmission from uplink grant signaling sent in the initial transmission — 1002

According to the index number, determine a precoding matrix of each symbol of one channel-coded codeword to be retransmitted — 1003

After coding, by using the precoding matrix, each symbol of the one channel-coded codeword to be retransmitted, send the coded symbol through an antenna — 1004

FIG. 10

1101 1102 1103

| Receiving unit | Determining unit | Coding and sending unit |

FIG. 11

1201 1202 1203 1204

| Receiving unit | Acquiring unit | Determining unit | Coding and sending unit |

FIG. 12

1301 1302 1303 1304

| Receiving unit | Acquiring unit | Determining unit | Coding and sending unit |

FIG. 13

**EP 2 555 457 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009307558 A1